# EUROPEAN PATENT SPECIFICATION

(11) **EP 1 521 540 B1**
(45) Date of publication and mention of the grant of the patent: **08.10.2008**
(21) Application number: 03739294.1
(22) Date of filing: 25.06.2003
(51) Int. Cl.: A47J 27/21, A47J 27/00, F24C 5/10

(54) **HEATING VESSEL**
ERHITZUNGSGERÄT
RECIPIENT CHAUFFANT

(30) Priority: 25.06.2002 US 391480 P; 22.10.2002 US 420305 P; 27.11.2002 US 429800 P
(43) Date of publication of application: 13.04.2005
(73) Proprietor: Jetboil, Inc., Hanover, NH 03755 (US)
(72) Inventor: DOWST, Perry, W., Weare, NH 03281 (US); ASPINWALL, Dwight, C., Hanover, NH 03755 (US)
(74) Representative: Hackett, Sean James
(86) International application number: PCT/US2003/019957
(87) International publication number: WO 2004/000082

(56) References cited:
- FR-A- 2 493 125
- GB-A- 882 881
- JP-A- 11 206 572
- JP-A- 11 244 135
- JP-A- 2001 149 225
- US-A- 2 014 931
- US-A- 3 069 148
- US-A- 5 373 836
- US-A- 5 564 589
- US-A- 5 992 407

## Description

### Cross References to Related Applications

This application claims the benefit of priority under 35 U.S.C. §119(e) from co-pending, commonly owned U.S. provisional patent applications: serial number 60/391,480, entitled *HEATING VESSEL,* filed June 25, 2002; serial number 60/420,305, entitled *HEATING VESSEL,* filed October 22, 2002; and serial number 60/429,800, entitled *HEATING VESSEL,* filed November 27, 2002.

### Statement of Government Interest

The U.S. Government has no interest in or to the present invention.

### Field of the Invention

The inventive concepts generally relate to highly efficient systems and methods of heat exchange, for use in any of a variety of fields, including to field of systems and methods for heating food and beverages.

### Background

It has long been desirable to have a portable vessel for heating liquids to allow a user to prepare a heated beverage or meal at a location remote from cooking facilities. Since the user must carry the fuel used for heating, high efficiency is desirable to reduce the weight of fuel which must be carried.

One attempt to improve efficiency in heating has been to contain the burning fuel in a housing which also contains the heating vessel. U.S. Patents 221,749 and 2,036,611 teach devices having an inner vessel mounted in a housing which also contains a burning material. The housings of these devices have lower intake vents to allow ingress of air to the burning material, and upper exhaust vents for allowing the exhaust gasses from burning to escape. The '749 patent teaches a device which employs a lamp oil burner while the '611 device bums a piece of solid fuel. The '611 device also teaches an insulating covering which can be slid over the exterior of the housing to limit heat loss once the liquid in the inner vessel has been heated.

More recently, gas burners have been advantageously employed to provide sufficient heat for cooking in a package small enough to be readily portable. U.S. Patents 3,978,844 and 4,191,173 teach devices employing a gas burner under a vessel which is supported on a skirt, the skirt having perforations to allow ingress of air to the burner for combustion. These devices house the gas supply for the burner in a handle. These devices are simple in structure, and most likely suffer from relatively low efficiency in heating.

To provide a degree of insulation for the inner vessel to improve efficiency, U.S. Patent 5,408,987 teaches a gas burner in combination with a structure similar to that of the '749 and '611 patents discussed above for use heating canned foods. Partitions position the can to be heated within the housing, and hot burner gasses pass between the can and the housing, exiting through openings in the top. The housing preferably includes one or more layers of insulation to improve efficiency and to reduce the risk of burning when the device is handled. The preference for employing multiple layers of insulation suggests that inefficient heat transfer to the canned food may result in excessive heating of the exterior of the housing.

U.S. Patent 5,125,393 teaches a vessel for use on a conventional cooking stove, having an inner vessel and an outer housing, with a gap therebetween. The device has a lower flange for mounting on the stovetop and surrounding a burner. When a gas burner is employed, the vessel has a barrier plate with a central opening intended to direct flow of hot exhaust from the burner around the exterior of the inner vessel. The device does not appear suitable for portable use.

In an attempt to improve efficiency by providing greater heat transfer between the hot burner exhaust and the vessel, .U.S. Patents 3,709,198; 3,730,165; and 5,690,094 teach gas heated vessels where the burner exhaust gasses are passed through one or more tubes extending through the vessel. As pointed out in the '094 patent, the liquid in the vessel serves to insulate the exterior, providing an additional benefit in reducing the risk of burning. However, a serious limitation of these devices is that the vessel is obstructed by the tubes passing therethrough. The obstruction of the interior of the vessel prevents its use for cooking stews, pasta, and similar comestibles which contain solids. Furthermore, the vessel cannot be readily cleaned, particularly when used at a remote location where the selection of cleaning utensils is limited. The inability to clean the vessel effectively limits the vessel to heating water, and thus typically will require the use of an additional container for mixing the heated water with the desired comestible.
Document GB 882 881 A describes a system comprising a vessel which is considered to represent the closest prior art.

### Summary of the Invention

A system for heating a substance according to the invention is defined in claim 1.

A heating vessel includes highly efficient heat exchanger. The heating vessel comprises a chamber having enclosed sides, a thermally conductive bottom end and a top end forming an opening for the introduction and extraction of contents to be heated, the bottom end having an external bottom side for receiving heat. The chamber may be comprised of a single wall, or it may include a plurality of walls. For example, two of more nested set of walls could be used.

A heater comprises the heat exchanger and a heat source having a heat outlet disposed at a fixed distance from the external bottom side of the chamber. The heat outlet is configured to deliver heat to a central area of the external bottom side. In, for example, a double walled heating vessel, an external bottom of an inner vessel that holds the contents receives the heat. The heater also includes a fuel intake port configured to couple to a fuel source, e.g., butane, propane, white case, kerosene, alcohol, gas, electricity and so on. The heat outlet may take any of a variety of forms, such as burner.

The heat exchanger comprises the external bottom side of the chamber (or a surface configured to couple to the external bottom side) and a series of thermally conductive protrusions coupled circumferentially about the central area of the external bottom side (or surface). The protrusions extend from the external bottom side to a distance about equal to or greater than the fixed distance of the heat outlet. In, for example, the double walled heating vessel, the protrustions may be coupled to the external bottom of the inner vessel that holds the contents to be heated. The protrusions may take the form of fins, pins, or other types of protrusions, which may or may not be radially disposed with respect to the heat outlet.

A top housing may take the form of, or include, a skirt having a top rim coupled circumferentially to the external bottom side and encasing the protrusions and having a bottom rim. The skirt may provide an ancillary means of heat transfer, so may also be considered part of the heat exchanger. Formed in the skirt may be a series of exhaust vents that form part of a gas flow path. In the double walled version, the skirt may couple to either of the inner vessel or an out shell which encases the inner vessel.

A bottom housing (or base) is configured to couple to the bottom rim of the skirt, or to be integral with the top housing. The bottom housing substantially encases the heat source and has a set of air inlet vents formed therein. The gas flow path is formed from the air inlet vents to the exhaust vents via the heat outlet. In various forms, the top housing and bottom housing may be integral, forming a single unit. Or, the skirt may be configured to the de-couple from the chamber, in which case it may or may not be integral with the bottom housing.

The heat outlet includes a top end configured to emit the heat and an bottom end coupled to the fuel source. A baffle plate may also be included and disposed at the bottom end of the heat outlet, or at least between the air inlet vents and the heat outlet. The baffle plate includes one or more air vents formed therein and configured to deliver a predetermined amount of air received from the air inlet vents to the heat outlet, as part of the gas flow path.

The heating vessel may also include a cover (or lid) configured to close the top opening of the chamber. A thermal insulator configured to substantially encase the sides of the chamber may also be included. When included, the insulator may cover a substantial portion of the chamber and, optionally, various heater elements. For example, if the base and heat source are removable from the top housing, the thermal insulator may include a bottom cover configured to encases the skirt and protrusions.

### Brief Description of the drawings

The drawing figures depict preferred embodiments by way of example, not by way of limitations. In the figures, like reference numerals refer to the same or similar elements.

FIG. 1 is an assembled view of one embodiment of a heating vessel in accordance with the present invention.

FIG. 2 is a perspective cutaway view of a portion of the heating vessel of FIG. 1.

FIG. 3 is a cutaway view of the assembled heating vessel of FIG. 1.

FIG. 4 is a partial cutaway view showing the heating vessel of FIG. 1 in stowed form.

FIG. 5 is a perspective view showing the heating vessel of FIG. 1 with an insulator.

FIG. 6A-B are views of an alternative embodiment of a heating vessel in accordance with the present invention.

FIG. 7 is a cutaway view of an alternative embodiment of a heating vessel in accordance with the present invention.

FIG. 8A-C are views of a heating vessel which is not in accordance with the present invention.

FIG. 9A-B are views of an alternative embodiment of a heating vessel in accordance with the present invention.

FIG. 10 is a perspective view of protrusions which are not in accordance with the present invention.

FIG. 11 is a perspective view of the protrusions used in various embodiments of the heating vessel, such as the heating vessel of FIG. 1.

FIG. 12 is a cutaway view of an alternative embodiment of a heating vessel in accordance with the present invention.

### Detailed Description of the Preferred Embodiments

A heating vessel in accordance with the present invention includes a chamber for holding contents to be heated and a high efficiency heat exchanger. Preferably the heating vessel is portable, although it could be scaled to larger sizes for different applications. The preferred embodiment and several alternative embodiments are described with respect to a personal cooking system capable of being handheld and compact, primarily for use in cooking foods and heating liquids. However, such heating vessels could be made larger, e.g., for enabling cooking of large or several portions. And, in other embodiments, rather than for cooking, the heating vessel could be used in other contexts, such as laboratory or industrial contexts, i.e., wherever high efficient heating is desirable or useful.

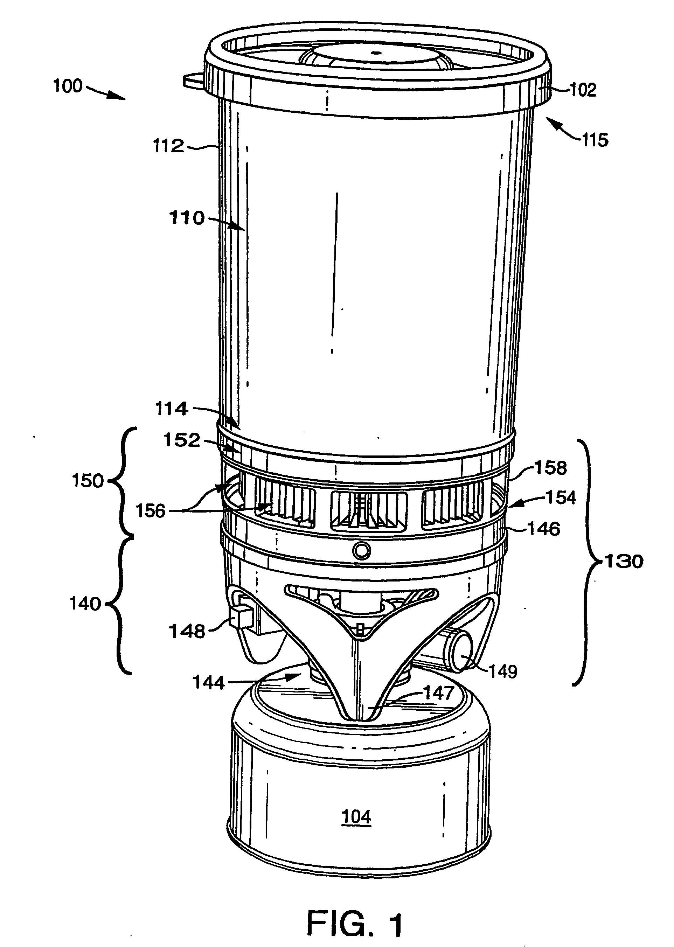

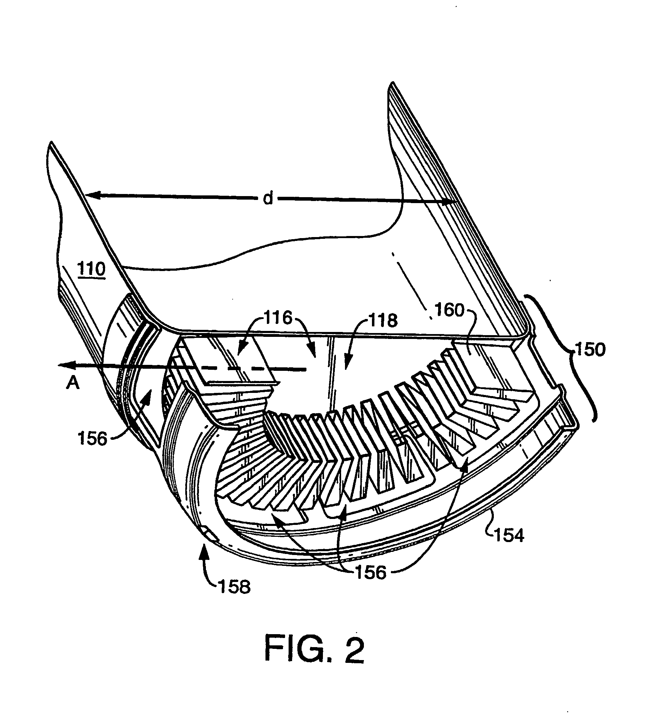

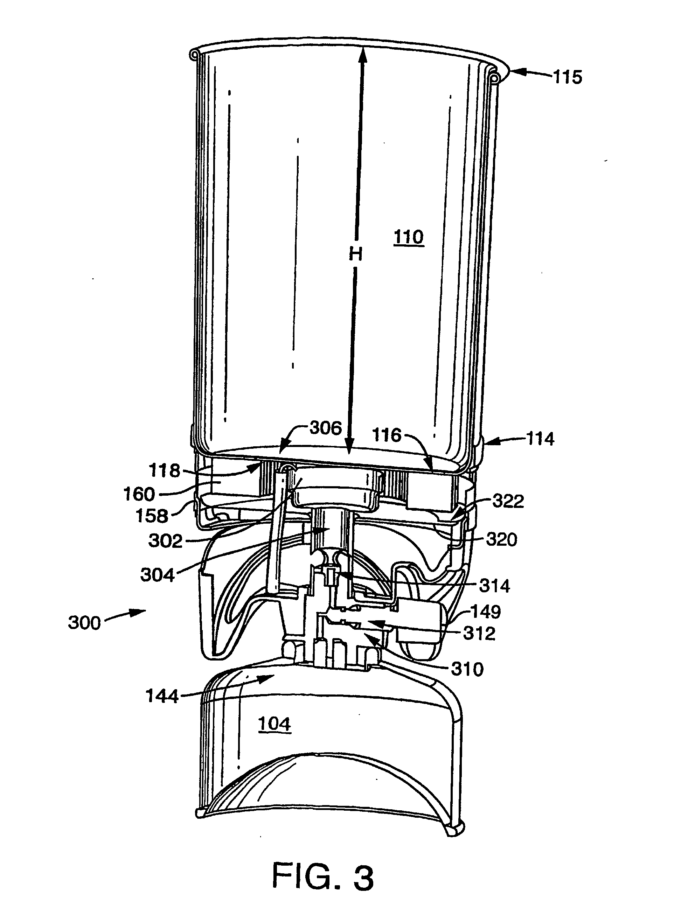

FIG. 1 shows an assembled view of a heating vessel 100 in accordance with the preferred embodiment of the present invention. Heating vessel 100 includes a chamber 110 for holding the contents during heating. In the preferred form the chamber comprises anodized aluminum, but the chamber could be made from other thermally conductive materials or composites in other embodiments, such as those including stainless steel or copper, as examples. The sides of chamber 110 are formed from a cylindrical member 112 that extends from a closed bottom end 114 to a top end 115. A lid 102 fits snuggly over top end 115 to enclose the chamber 110. Lid 102 may be made from a thermoplastic material, for example. In this embodiment, while not essential, chamber 110 has a volume of about 1 liter or so with the lid 102 on, i.e., generally sufficient to hold and heat a serving of a beverage or can of soup, as just a couple of examples. The height h of the chamber 110 is about 139,7 mm (5.5 inches) (see FIG. 3) and the inner diameter *d* is just under about 101,6 mm (4 inches) (see FIG. 2).

In accordance with the present invention as defined in claim 1, a heater 130 includes a high efficiency heat exchanger. Heater 130, or portions thereof, can be permanently or removably coupled to an external side of bottom end 114 of chamber 110, referred to as external bottom side 116 in FIG. 2. A typical camping or stove heater can achieve, under very good conditions, a heat transfer efficiency of about 35-45%, i.e., in percentage of the amount of the heat output by the heat source (e.g., a burner) that is transferred to the interior of a chamber. However, the heat transfer achieved by the heat exchanger of the present invention is beyond 50%, and preferably 75% or more under the same conditions. In normal conditions, the efficiency of the a heat exchanger in accordance with the present invention, is greater than about 90%.

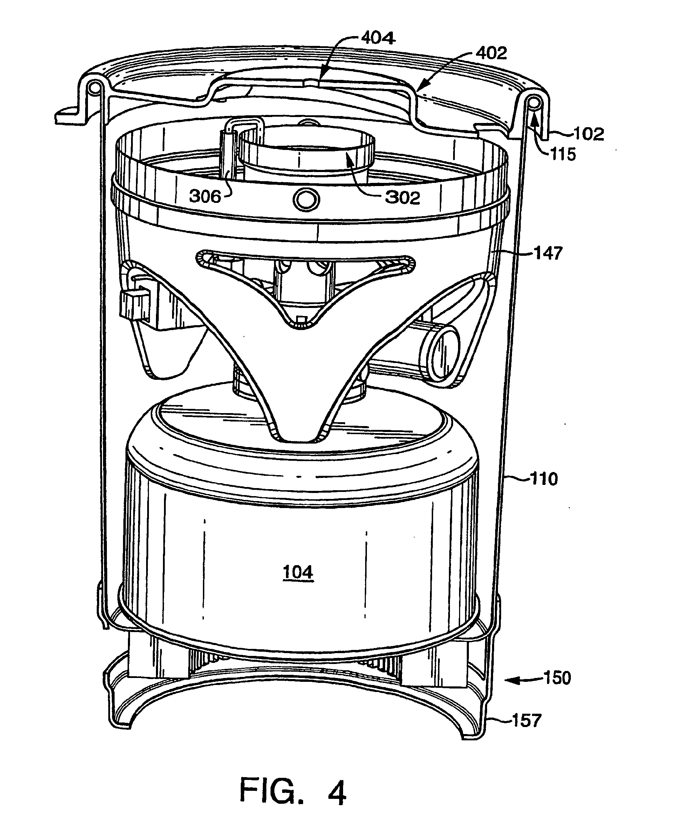

In the preferred embodiment, the heater 130 comprises a top portion 150 and a bottom portion (or base) 140. The top portion 150 includes a top housing 158, which can take the form of a skirt that includes a top rim 152 configured to couple to the bottom end 114 of chamber 110 and a bottom rim 154 configured to couple to a top rim 146 of the bottom portion 140, which can take the form of a base. In this embodiment, it is preferred that the top portion 150 and bottom portion 140 can be de-coupled to facilitate storage of the bottom portion 140 within chamber 110 when not in use (see FIG. 4). Accordingly, the coupling between top portion 150 and bottom portion 140 may be a bayonet coupling, snap coupling or threaded coupling, as examples. The top housing 158 may be made from an anodized aluminum material, but need not be highly thermally conductive.

In other embodiments, the top portion 150, or at least some components thereof, may be integral with bottom portion 140, or at least some components thereof For example, top housing 158 may be integral with bottom portion 140. In other forms which are limited by the definition in claim 1, protrusions 160 may be coupled to a thermally conductive plate configured to mate with external bottom side 116 of chamber 110, so could also be integral with skirt 158.

The bottom portion 140 includes a heat source that takes the form of a burner or burner head (see burner 302 of FIG. 3). The burner receives fuel from a fuel source 104 that couples to a fuel intake port 144 of the heater 130. In this embodiment, the fuel source 104 is a gas source, such as a pressurized canister of mixed propane and butane. Such fuel sources are known in the art, particularly in the camping and hiking fields. In other embodiments, the fuel source could be of a different type, such as white gas, kerosene, alcohol or gasoline. In yet other embodiments, fuel sources could include electricity or solid fuels.

In the embodiment of FIG. 1, a fuel valve knob 149 allows user regulation of the fuel supplied to the burner and an igniter button 148 communicates with an interval igniter (shown in FIG. 3) that causes ignition at the burner. The burner requires a certain amount of oxygen to produce and maintain a flame. The flame produces heated exhaust as it burns. Accordingly, the heater 130 includes a gas flow path configured to enable the supply of oxygen to the burner and the flow of exhaust from the burner. In operation, a vacuum is formed through the gas flow path that achieves this result.

Portions of the heater top portion 150 and bottom portion 140 combine to form the gas flow path. Bottom portion 140 includes a bottom housing 147 that includes a plurality of air inlet vents 142 that allow air to flow to the burner from the external environment. In this embodiment, bottom housing 147 may be made of a thermoplastic material, and also forms legs that support the heating vessel 100 when the fuel source 104 is not attached. The top housing 158 of top portion 150 includes a series of exhaust vents 156 configured to provide an exhaust path from the burner to the external environment, i.e., external to the heater. Greater detail of the gas flow path may be appreciated from the discussion related to FIG. 3.

FIG. 2 provides a perspective cutaway view of the chamber 110 and top portion 150 of the heater 130. As can be seen, the top housing 158 is generally cylindrical and surrounds a series of thermally conductive, radially disposed fins 160, here shown in the form of a ring. In the preferred form, the fins 160 are made of anodized aluminum, but other thermally conductive materials could be used, such as copper or steel. The fins of FIG. 2 are made from a single strip of material formed in a circular fin arrangement. The fins 160 are coupled to the external bottom side 116 of the chamber bottom end 114. In the embodiment of FIG. 2, the fins are brazed to external bottom side 116, but could be soldered, glued, or electrically or sonically welded. The opposite side of bottom end 114 is an internal bottom side (not visible) that comprises a portion of the interior of chamber 110.

A central area 118 of external bottom side 116 is encircled by fins 160. Central area 118 receives a substantial portion of the heat from the burner. A large portion of the remainder of the heat is received by the fins 160 as the hot exhaust from the burner passes through the fins and exits the top housing 158 via vents 156, for example, as is shown by arrow A.

FIG. 3 is a cut away view showing the heater 130 of FIG. 1. Top housing 158 is shown coupled to chamber 110 and encircling fins 160, which are coupled to the external bottom side 116 of the bottom end 114 of chamber 110. As is shown, the fins 160 extend from the external bottom side 116 of chamber bottom end 114 for a height H, which is about 12,7 mm (1/2 inch) in this embodiment.

The bottom portion 140 of heater 130 includes burner (or burner head) 302 coupled to a fuel valve assembly 300. The fuel valve assembly 300 includes a fuel/air mix tube 304, which extends from a fuel valve body 310. Within the fuel valve body 310 is disposed a valve stem 312, which includes valve stem knob 149 (see also FIG. 1). Together, valve stem 312 and valve stem knob 149 allow a user to control the flow of fuel from fuel source 104, which is coupled to fuel intake port 144. Fuel is pressure released from the fuel tank 104, through the fuel valve body 310 and valve stem 312 into an orifice 314 and then into fuel/air mix tube 304. As is known in the art, the fuel/air mix tube 304 includes openings that allow ambient air to mix with fuel that is pressure released into the tube. The ambient air is received via the gas flow path, and drawn from air inlet vents 142 formed in the bottom portion 140. An igniter 306 provides a spark to burner 302, which causes combustion at the burner. The igniter 306 generates sparks in response to user activation of the igniter button 148 (shown in FIG. 1).

In the preferred embodiment, a disk shaped base plate 320 is disposed below burner 302, with igniter 306 passing through base plate 320 such that it can provide the spark to burner 302. With the heater bottom portion 140 coupled to the top portion 150, burner 302 and fins 160 are housed within a cavity formed by base plate 320, top housing 158 and the external bottom side 116 of chamber 110. Vents 322 in base plate 320 allow the gas flow path of additional oxygen, or secondary combustion air, required for complete combustion, to be maintained from the vents 142 in the bottom housing 140 of the heater 130 through the vents 156 in the top housing 158 of the heater. Optimally, the vents 142 in the bottom portion 140 and vents 322 in base plate 320 are chosen to achieve a desired maximum burn rate for the burner 302. In the preferred form, the burner output is chosen to be about 7,000 BTUH, but other burner desired maximum outputs could be chosen and the vents sized accordingly. For the corresponding burn rate, the total air vent area in base plate 320 is about 8,9 cm² (1.38 square inches). While higher burn rates could easily be achieved, in food preparation higher burn rates could lead to scorching of food. Preferably, regardless of the desired maximum burn rate, the vents are chosen to ensure the most efficient combustion of fuel and highest heat transfer possible. Excessive total air vent area in base plate 320 will introduce excess air, lowering burner exhaust temperature and hence heating efficiency. Inadequate air vent area will limit required secondary combustion air to the burner, resulting in inadequate combustion. As an example, using the parameters set forth herein, heating vessel 100 can bring a liter of water to boil in about 2 minutes.

Also, in assembled form, burner 302 is disposed within the inner circumference of ring of fins 160. In this embodiment, the burner has a diameter of about 3,5 cm (1 3/8 inches), the interior diameter of the fins is about 4,8 cm (1 7/8 inches) and the outer diameter of the fins is about 8,4 cm (3 5/16 inches), with the height *H* of the fins about being about 1,3 cm (½ inch). In this embodiment, the inner diameter of the fins 160 is made sufficiently large is encircle the burner 302 and igniter 306. The burner 302 is also set at a distance of about H or less from the external bottom side 116 of the bottom end 114 of chamber 110. In this configuration, the flame produced by burner 302 is encircled by fins 160. High heat transfer is achieved from this configuration, wherein a large majority of the heat provided by burner 302 is transferred to central area 118 of the heat chamber external bottom side 116 and the fins 160, with the exhaust passing through and around fins 160.

FIG. 4 shows a view of the bottom portion 140 of the heater 130 coupled to the fuel source 104 and fit within chamber 110. The ability to nest theses elements, while not essential, provides a concise package for the heating vessel 100 for storage and travel. Lid 102 may include a protrusion 402 to accommodate igniter 306 and burner 302. The lid may also include a vent hole 404, to act as a release valve for pressure build up within chamber 110. Lid 102 may also include a rounded opening to accommodate drinking of a beverage from chamber 110. In other embodiments, the cup formed by protrusion 402 may include measuring markings, such as teaspoon, tablespoon, etc.). And, in other embodiments, the lid could include exterior, vertically disposed ridges or protrusions to providing better gripping for a user.

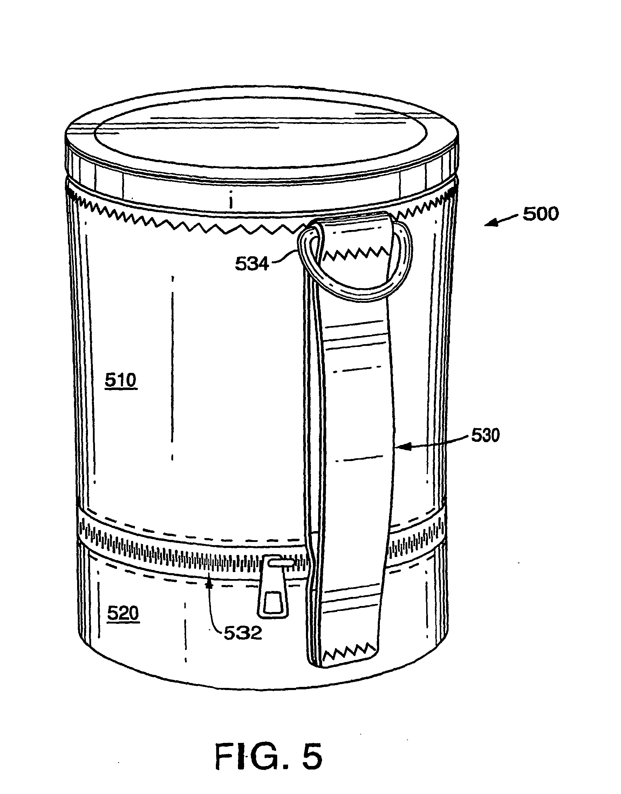

In the preferred form, largely owing to the efficiency of the heat exchanger, the large majority of the heat is transferred to the interior of chamber 110 instead of exiting the exhaust vents 156, and, as is shown in FIG. 5, for additional comfort and insulator 500, of low temperature service range, may be provided that fits over a substantial portion of chamber sides 112 and heater top portion 150. Alternatively, plastic or metallic handles may be employed as attached to chamber sides 112. A first section 510 encases the sides 112 of chamber 110. A second section 520 encases the top portion 150 of heater 130. To avoid loss of the second section 520, the second section is preferably coupled to the first section 510. In this embodiment, the first section 510 and second section 520 are made of neoprene, although other insulating materials could be used such as rubber. The insulator 500 includes a handle 530, which may serve as a hinge that couples the first section 510 to the second section 520. Otherwise, the handle 530 is useful for holding and carrying the heating vessel 100. To ensure a good closure, a zipper 532, such as a micro-zipper, may be included that securely joins the first section 510 and second section 520 when both are in use. A "D" ring 534 may also be included to allow easy clipping of the heating vessel 100.

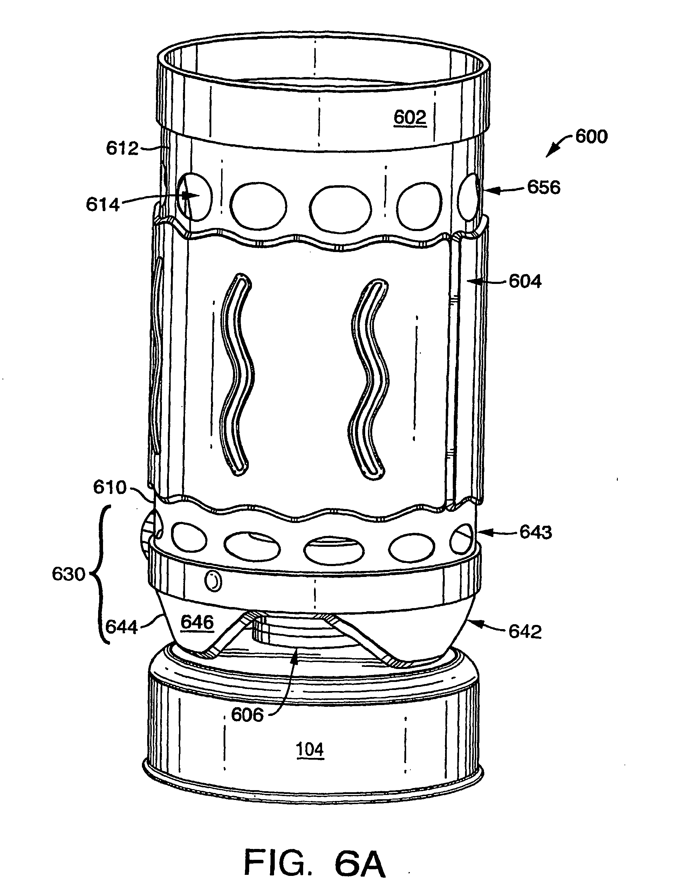

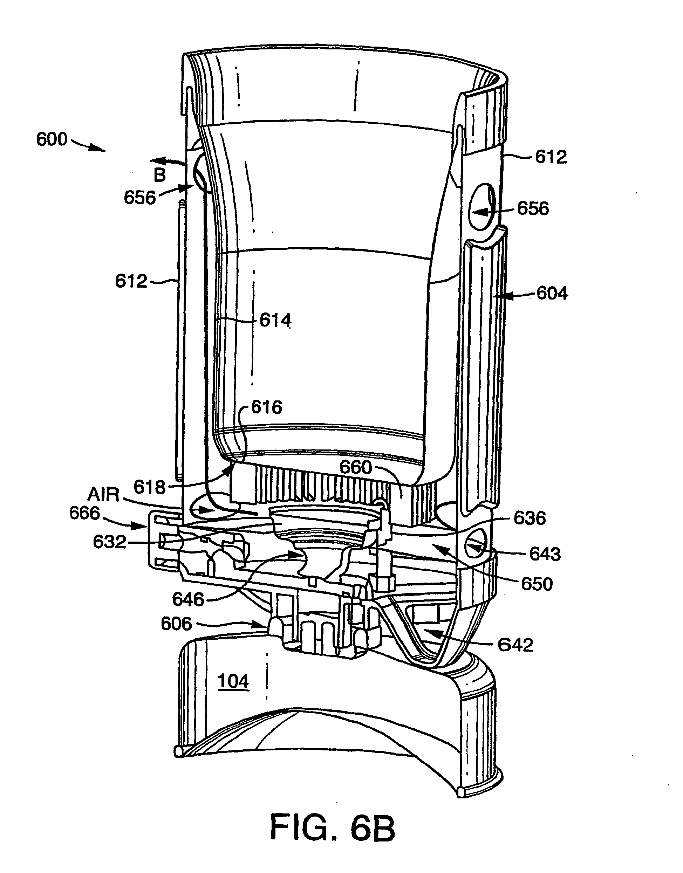

FIG. 6A and 6B show another embodiment of a heat vessel 600 in accordance with the present invention. FIG. 6A is a fully assembled view, wherein the heat vessel is configured to obtain fuel from a fuel source, such as fuel source 104, also shown in FIG. 1. A chamber 610 is configured to hold the contents to be heated and includes a top end configured to receive a lid 602. Chamber 610 is a dual wall chamber, having an exterior wall 612 and an interior wall 614 (see also FIG. 6B). Heating vessel 100 of FIG. 1 was shown with a single wall chamber 110, but could have also utilized a dual wall design. Disposed on the outer surface of exterior wall 612 is an insulating grip layer 604. The insulating grip layer 604 provides improved security in gripping the unit, and a reduction in temperature in the gripping region. As an example, the insulating grip layer 604 could be made from rubber, neoprene or any of a number of other commercially available insulating materials.

In this embodiment, a heater 630 is integral with chamber 610. The heater 630 includes a base housing 644. The base housing 644 includes a set of legs (or supports) 646 which support heating vessel 600 when the fuel source 104 is de-coupled. A gas flow path is established between a set of primary air inlet vents 642 (see FIG. 6B), formed as holes or gaps located in base housing 644, and a set of exhaust vents 656 formed in an upper portion of the exterior wall 612 of chamber 610. The primary air inlet vents 642 serve as the primary source of air to an interior burner (see FIG. 6B), while a set of secondary air inlet vents 643 may also be provided, if needed to complement the air supply to the burner.

FIG. 6B shows a cross sectional, cutaway view of heating vessel 600 of FIG. 6A. A heater 630 includes a fuel intake port 606 configured to couple to fuel source 104. A burner 632 is situated above the fuel source 104 and within a set of protrusions, with a fuel valve assembly 666 disposed therebetween. Fuel valve assembly 666 forms part of the heater 630 and is housed within base housing 644. Fuel valve assembly 666 is substantially similar to the fuel valve assembly 300 of FIG. 3, so not discussed in detail with respect to heating vessel 600.

To accomplish the gas flow path, air travels from the air inlet vents 642, 643 to the burner 632, and from the burner 632 combustion exhaust travels around protrusions 660 and up between exterior wall 612 and interior wall 614 and then exits from exhaust vents 656, as is shown by arrow B. The primary air inlet vents 642 function to permit entry of primary combustion air into the volume below a base plate 650, i.e., an area that includes a fuel/air mix tube 646 that feeds burner 632. Base plate 650 is located at the bottom of and within the exterior wall 612 and below burner 632 and the secondary air inlet vents 643. This configuration allows air from secondary air inlet vents 643 to go directly to burner 632. Base plate 650 includes a cutout for burner 632 and a burner igniter 636 to project upwards through the base plate.

The base plate 650 provides a barrier preventing the hot combustion byproducts emanating from the burner 632 to mix with and/or disturb the burner fuel-air mix, which is generated and fed into the burner in the space below, defined within the heater base housing 644 and base plate 650. Therefore, the base plate 650 provides for reliable ignition and overall performance of the burner 632. Secondary air inlet vents 643 are optional, in the case where a greater flow of air is required at burner 632 for efficient combustion. In other embodiments, the heater 630, housing 644 or various components thereof may be detachable from chamber 610 as defined in claim 1. For example, the heater 630 or housing 644 could be attached by any number of means, such as those previously discussed.

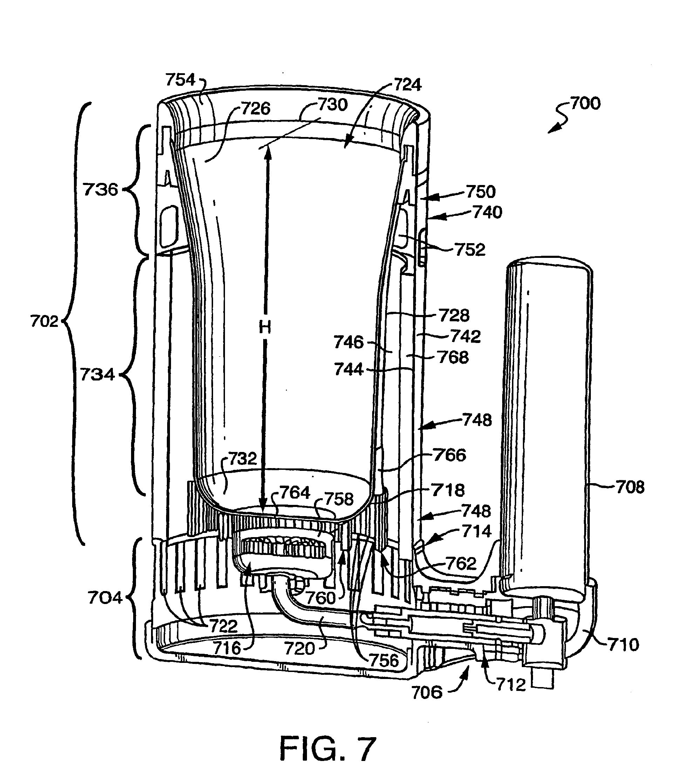

FIG. 7 is a section view of another embodiment of a heating vessel 700 which employs a chamber 702 and a heater 704 that are formed into an integral unit, providing a compact, readily portable device for heating liquid comestibles at a remote location. Such liquid comestibles include hot water for cooking, tea, coffee, broths, and other comestibles such as soups and stews having a generally liquid consistency which allows convective heat transfer through the liquid comestible.

The heater 704 couples to a fuel supply system 706 having of a replaceable fuel tank 708 for containing a gas fuel such as butane or propane under pressure, a fuel tank receptor 710 into which the replaceable fuel tank 708 can be received, and a fuel supply and mixing line 712 which communicates with the replaceable fuel tank 708 when received in the fuel tank receptor 710. In the embodiment illustrated, the fuel tank receptor 710 is configured to position the fuel tank 708 offset from and alongside the chamber 702, so that the fuel tank 708 can serve as a handle for a user of the heating vessel 700.

The heater 704 has an upper support structure 714 and a burner head 716 bounded by a peripheral border 718. The burner head 716 illustrated is an open-flame type, but it should be appreciated that a radiant-type burner head could be employed. The fuel supply and mixing line 712 communicates with the burner head 716 and provides the gas fuel and primary combustion air to the burner head 716. The fuel supply and mixing line 712 has a fuel-air mixing tube 720 in which the stream of gas fuel entrains air for primary combustion before reaching the burner head 716. To minimize the overall height of the heating vessel 700, the fuel-air mixing tube 720 is horizontal over a substantial portion of its length. The upper support structure 714 of this embodiment has a number of air intake vents 722 which allow ingress of ambient air, making air available for introduction into the fuel-air mixing tube 720 as well as to provide air for secondary combustion, if such is required by the particular burner head 716 employed. The intake vents 722 can also be sized sufficiently large as to allow a user to insert a match or other ignition device to light the burner head 716.

The chamber 702 has an inner vessel 724 having an inner vessel interior surface 726 and an inner vessel exterior surface 728. The inner vessel 724 terminates at an open top 730 and extends downward therefrom to an inner vessel bottom 732. The inner vessel 724 provides a structure for holding the liquid to be heated. The inner vessel 724 is formed of a highly conductive material, such as aluminum, and the inner vessel interior surface 726 is preferably treated to provide a relatively inert, non-stick surface for case of cleaning. Such a surface can be formed by anodizing, applying a coating such as Teflon , or similar techniques known in the art. The inner vessel 724 is preferably formed as illustrated with a lower cylindrical section 734 and an upper frusto-conical section 736 which terminates at the open top 730.

The chamber 702 also has a housing 738 in which the inner vessel 724 resides. The housing 738 has a housing sidewall 740 with a housing sidewall exterior surface 742 and a housing sidewall interior surface 744. The housing sidewall 740 can be formed of any suitable heat-resistant material, one preferred material being stainless steel for attractive appearance and ease of cleaning. The housing sidewall 740 is configured with respect to the inner vessel 724 so as to provide an annular gap 746 between the inner vessel exterior surface 728 and the housing sidewall interior surface 744. The housing sidewall 740 terminates in a housing sidewall base region 748 and a housing sidewall top region 750. The housing sidewall top region 750 has a number of exhaust vents 752 therethrough, which communicate with the annular gap 746 to allow egress of air and gasses therefrom. Forming the inner vessel 724 with the lower cylindrical section 734 and the upper frusto-conical section 736 facilitates providing the annular gap 746 while maintaining a relatively constant diameter for the housing 738 to improve its appearance and to minimize the likelihood of spilled liquids entering the exhaust vents 752, while also maintaining the open top 730 relatively wide to facilitate access to the inner vessel 724.

The inner vessel 724 is positioned in the housing 73 8 and, in this embodiment, is affixed therein by a rim piece 754 which attaches to both the open top 730 of the inner vessel 724 and to the housing sidewall top region 750. The rim piece 754 is preferably formed of a material having low thermal conductivity, such as a heat-resistant plastic, to allow the user to comfortably sip liquids from the inner vessel 724 without risk of burning.

Means for mounting the housing 738 to the upper support structure 714 of the heater 704 are also provided. In this embodiment, these means are provided by forming the sidewall base region 748 integral with the upper support structure 714. The heater 704 and the housing sidewall 740 are configured such that the burner head 716 is positioned under the inner vessel bottom 732, and preferably is centered with respect thereto. Thus, when the burner head 716 is ignited, the burning fuel heats the inner vessel bottom 732. Since the inner vessel 724 is formed of a highly conductive material, the inner vessel bottom 732 conducts the heat to the liquid contained in the inner vessel 724 to heat it. As the burner head 716 operates, it generates hot combustion gasses which pass into the annular gap 746 and eventually exit through the exhaust vents 752, while ambient air for combustion enters through the intake vents 722.

An array of downwardly-directed protrusions 756 are attached to the inner vessel exterior surface 728. These protrusions 756 are formed of a highly thermally conductive material, such as aluminum or copper. The protrusions 756 extend beyond the inner vessel bottom 732 and are arranged around the peripheral border 718 of the burner head 716 so as to define a cavity 758 encompassing the peripheral border 718 of the burner head 716. It should be noted that the boundary of the cavity 758 is formed by the protrusions 756, which are discrete elements as defined in claim 1, rather than by a continuous surface. The protrusions 756 are thus positioned to extract from the combustion gasses a substantial portion of the heat generated by the combustion of gasses by the burner head 716 as the hot gasses pass between the protrusions 756 into the annular gap 746. Similarly, when the burner head 716 is a radiant burner, the protrusions 756 collect any radiant heat emitted from the burner head 716, as well as heat from the heated air surrounding the burner head 716 before this heated air passes into the annular gap 746. In either case, the heat collected by the protrusions 756 is transferred to the inner vessel 724 and to the liquid contained therein, greatly increasing the fuel efficiency of the heating vessel 700. An additional benefit of the protrusions 756 is that the increased extraction of heat reduces the temperature of the gasses which pass into the annular gap 746, decreasing the amount of heat which is conducted into the housing sidewall 740 and helping to maintain the housing sidewall exterior surface 742 at a comfortable temperature.

The protrusions 756 of this embodiment are rectangular in configuration, and preferably have an aspect ratio, defined as the height of the protrusion 756 divided by the effective diameter of the protrusion 756, which is at least about five (5), and more preferably between about ten (10) and twenty (20). The lower limit of the preferred range assures that the protrusions 756 provide a significant degree of heat transference. The upper limit helps assure that the protrusions 756 provide even greater heat transfer, without unduly complicating the fabrication of the protrusions 756, and helps assure that they have sufficient structural integrity to withstand use of the heating vessel 700 in the field. Additionally, the particular method of fabrication may limit the upper range of the aspect ratio of protrusions 756 which can be readily fabricated. When the protrusions 756 have a rectangular cross section, the aspect ratio is defined as the ratio of the effective height of the protrusions (i.e., the distance the protrusions 756 extend beyond the inner vessel bottom 732) to the effective diameter, which is the diameter of a circle having the same area as the rectangular cross section of the protrusions 756.

The protrusions 756 illustrated are formed as rectangular fins, and are arranged in a first ring of fins 760 and a second ring of fins 762. The first ring of fins 760 and the second ring of fins 762 are cut from sheet stock to provide their rectangular cross-section. In this case, the effective diameter of the protrusions 756 is the diameter of a circle having the same area as the rectangular cross-section. Alternatively, the protrusions 756 could have cross-sections that are square, circular, or other shapes.

The first (inner) ring of fins 760 are arranged on the inner vessel bottom 732 so as to form the cavity 758. The first-ring of fins 760 can be readily formed on the periphery of a disk 764. The first ring of fins 760 and the disk 764 can be cut from sheet stock as an integral piece, and the first ring of fins 760 thereafter bent perpendicular to the disk 764. The disk 764 can then be affixed to the inner vessel bottom 732 by brazing, welding, adhering with high temperature adhesive, or similar techniques. However, the technique for affixing the disk 764 to the inner vessel bottom 732 should not interfere with the transfer of heat from the first ring of fins 760 to the inner vessel bottom 732 through the disk 764. The fins of the first ring of fins 760 are preferably cut substantially wider than the thickness of the sheet stock, providing the rectangular cross-section, and the fins are each bent such that one of the cut edges faces radially inwards so that the fins are substantially radial in orientation, having the long sides of the rectangular cross-section extending in a substantially radial direction. This orientation of the first ring of fins 760 substantially minimizes radial obstruction of the flow of the hot gasses outward from the burner head 716.

The second (outer) ring of fins 762 are attached to the inner vessel exterior surface 728 and extend downwardly beyond the inner vessel bottom 732. The second ring of fins 762 can be readily formed on one edge of a strip 766, the second ring of fins 762 and the strip 766 being cut from sheet stock in an integral piece. The strip 766 can be attached to the inner vessel exterior surface 728 and the second ring of fins 762 thereafter bent so as to be substantially radial in orientation. The strip 766 can be attached to the inner vessel exterior surface 728 by any of the techniques discussed above for attaching the disk 764 to the inner vessel bottom 732. While the second ring of fins 762 may traverse a portion of the inner vessel exterior surface 728, it has been found that efficiency decreases if the second ring of fins 762 extends too far along the inner vessel exterior surface 728. Preferably, the second ring of fins 762 does not extend along the inner vessel exterior surface 728 more than 1/4 of an inner vessel height H, the inner vessel height H being defined as the distance separating the open top 730 from the inner vessel bottom 732. Again, the fins of the second ring of fins 762 are preferably cut substantially wider than the thickness of the sheet stock, and are each bent such that one of the cut edges faces radially inwards so that the fins are substantially radial in orientation.

A method of fabrication for the protrusions 756 may comprise cutting the protrusions from the edges of pieces of sheet stock, which allows readily providing a relatively large aspect ratio for the protrusions 756. However, this technique does increase the number of individual parts which must be formed and assembled to fabricate the chamber 702.

While the protrusions 756 greatly increase the transfer of heat to the inner vessel 724, an insulating layer 768 may also be provided on the housing sidewall interior surface 744 to improve the efficiency of the heating vessel 700 even further. The insulating layer 768 resides in a portion of the annular gap 746 below the exhaust vents 752 so as to allow the flow of heated gasses through the annular gap 746 and out of the exhaust vents 752. One preferred insulating material for the insulating layer 768 is a ceramic paper, such as Lydall 1535 LK, which consists of 50% alumina fibers and 50% silica fibers, and is available from Lydall, Inc. The insulating layer 768 reduces heat loss from the inner vessel 724, and helps to maintain the housing sidewall exterior surface 742 at a comfortable temperature.

FIG.s 8A through 8C illustrate a heating vessel 800 which is not in accordance with the invention designed for use with a conventional camping stove, such as the gas stove 802 illustrated. Conventional lightweight gas stoves such as the gas stove 802 illustrated are well known, and are employed in camping, hiking, and similar activities for heating foods at a remote location. While the heating vessel 800 may have decreased fuel efficiency compared to the heating vessel 700 discussed above, the ability to employ the gas stove 802 instead of a dedicated heater can reduce the overall amount of equipment carried by a user in situations where both the heating vessel 800 and conventional cookware are to be used.

The gas stove 802 has a fuel supply system 804 having a replaceable fuel tank 806, a fuel supply and mixing element 808, and a burner head 810 bounded by a peripheral border 812. The burner head 810 of the gas stove 802 is an open-flame burner, since camping stoves are frequently employed with reflective cookware, making the use of a radiant-type burner head impractical. However, it should be appreciated that the heating vessel 800 could be effectively employed with a radiant-type burner. To support a conventional cooking vessel such as a sauce pan or skillet, the gas stove 802 has an upper support structure 814 having four support members 816, on which the cooking vessel can rest.

The heating vessel 800 includes a chamber 819 that has an inner vessel 818, having an inner vessel interior surface 820 and an inner vessel exterior surface 822. The inner vessel 818 terminates at an open top 824 and an inner vessel bottom 826, which are separated by an inner vessel height H. The inner vessel 818 is essentially similar to the inner vessel 724 discussed above.

The chamber 819 also has a housing 828 in which the inner vessel 818 resides. The housing 828 has many features in common with the housing 738 discussed above, and has a housing sidewall 830 with a housing sidewall exterior surface 832 and a housing sidewall interior surface 834. The housing sidewall 830 is configured to provide an annular gap 836 between the inner vessel exterior surface 822 and the housing sidewall interior surface 834. The housing sidewall 830 again terminates in a housing sidewall base region 838 and a housing sidewall top region 840, which has a number of exhaust vents 842 which communicate with the annular gap 836. A rim piece 844 is provided, which attaches to both the open top 824 of the inner vessel 818 and to the housing sidewall top region 840 to affix the inner vessel 818 in the housing 828. An insulating layer 846 is preferably provided on the housing sidewall interior surface 834.

Means are provided for mounting the housing 828 to the upper support structure 814 of the gas stove 802. The sidewall base region 838 is provided with a number of recesses 848 sized and spaced to engage the four support members 816 of the upper support structure 814 to support the chamber 819 thereon, and thus serves as the means for supporting the housing. The gas stove 802 and the housing sidewall 830 are configured such that the burner head 810 is positioned under the inner vessel bottom 826, and preferably is centered thereunder. When the gas stove 802 operates, air for combustion enters the sidewall base region 838 around the peripheral border 812 of the burner head 810.

While the gas stove 802 illustrated has four support members 816 positioned at 90° angles, many camping stoves have only three support members positioned at 120° angles. To allow the heating vessel 800 to be employed with either three-support or four-support stoves, the sidewall base region 838 can be provided with a first series of recesses 848', which are spaced at 90° angles to engage four support members, and a second series of recesses 848" which are spaced at 120° angles to engage three support members, as shown in FIG.s 8B and 8C.

While the recesses 848 could be spaced such that one recess 848 is employed in both the first series of recesses 848' and the second series of recesses 848", in this embodiment the two series of recesses (848', 848") are separate, which allows blocking those recesses (848' or 848") which are not engaging the upper support structure 814 to limit the ingress of dilution air. This can be achieved by employing a blocking ring 850 which slidably, rotatably engages the sidewall base region 838. The blocking ring 850 can be sized to fit tightly over the sidewall base region 838, and maintained thereon by friction. Alternatively, when a more secure attachment is desired, an annular retaining edge (not shown) can be provided on the sidewall base region 838 over which the blocking ring 850 is fitted.

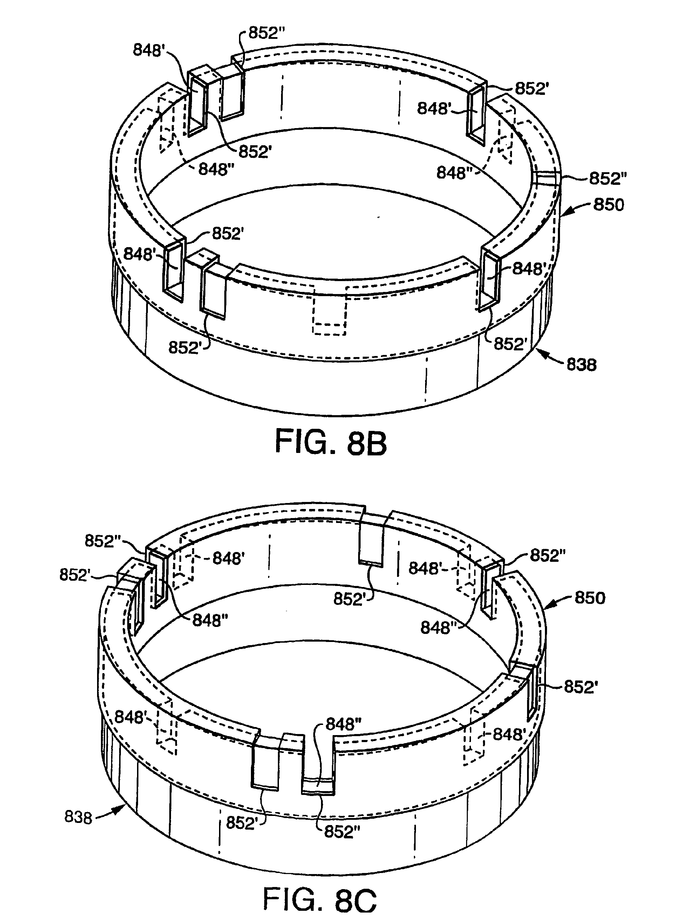

As best shown in FIG.s 8B and 8C, the blocking ring 850 has a first series of cutouts 852' and a second series of cutouts 852". The first series of cutouts 852' are positioned at 90° angles to match the first series of recesses 848', while the second series of cutouts 852" are positioned at 120° angles to match the second series of recesses 848". The blocking ring 850 can be slid relative to the sidewall base region 838 to align the first series of cutouts 852' with the first series of recesses 848', as shown in FIG. 8B, or to align the second series of cutouts 852" with the second series of recesses 848", as shown in FIG. 8C, when a three-support camping stove is to be employed. The series of recesses (848' or 848") which is not aligned with one of the series of cutouts (852' or 852") are blocked by the blocking ring 850 to prevent ingress of dilution air therethrough.

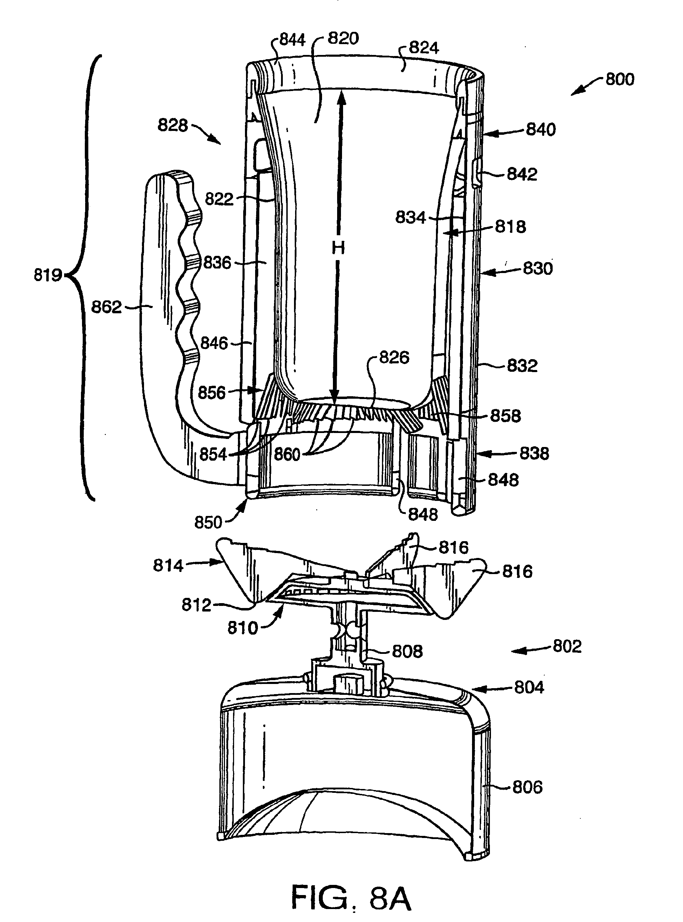

Returning to FIG. 8A, the chamber 819 has coupled to it an arrangement of downwardly-directed protrusions 854 attached to the inner vessel exterior surface 822. The protrusions 854 are formed in a ring of fins 856 attached to the inner vessel exterior surface 822 and extending beyond the inner vessel bottom 826. The protrusions 854 can be formed in a manner similar to the second ring of fins 762 shown in FIG. 7 and discussed above. The protrusions 854 are arranged around the peripheral border 812 of the burner head 810 so as to define a cavity 858 encompassing the projection of the peripheral border 812.

Since the gas stove 802 is intended for use with conventional cooking vessels, which are typically larger in diameter than the chamber 819, the burner head 810 of the gas stove 802 frequently has a peripheral border 812 substantially larger than the peripheral border 118 of the burner head 116 employed in the embodiment shown in FIG. 7. In such cases, it may be beneficial to employ an arrangement of supplemental protrusions 860 to assist in transferring heat from the heated gasses produced by the burner head 810 to the inner vessel 818. The supplemental protrusions 860 extend into the cavity 858, and in the embodiment illustrated can be formed in a manner substantially similar to that of the first ring of fins 760 shown in FIG. 7 and discussed above.

The heating vessel 800 preferably has a handle 862 which attaches to the housing 828. While the handle 862 could be permanently attached, it is preferred for the handle 862 to be removable to provide the heating vessel 800 with a more compact overall size for storage. Preferably, the handle 862 is configured to be contained in the inner vessel 818 when removed for storage.

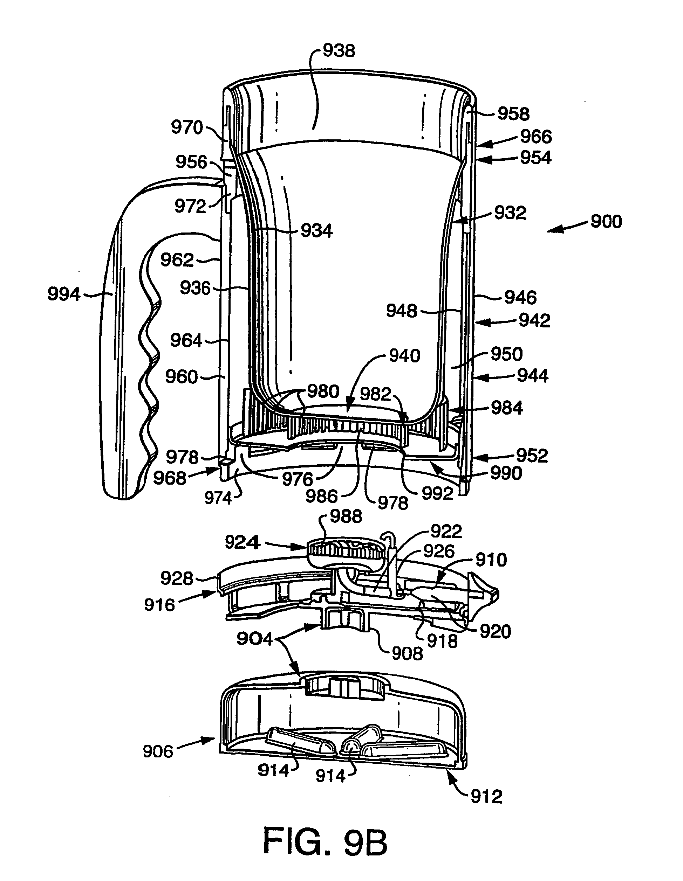

FIG.s 9A and 9B illustrate another embodiment of the present invention, a heating vessel 900 includes a chamber 919 that is designed for use with a dedicated heater 902 to provide a compact, readily portable heating device, but without making the chamber 919 and the heater 902 an integral unit. This allows the chamber 919 to be removed from the heater 902 for ease of cleaning, and allows the sequential use of multiple chambers with the single heater 902. The heating vessel 900 also employs active air flow to insulate the exterior of the heating vessel 900, as will be discussed in greater detail below. The particular details of the chamber 919 and the heater 902 are best shown in the section view of FIG. 9B.

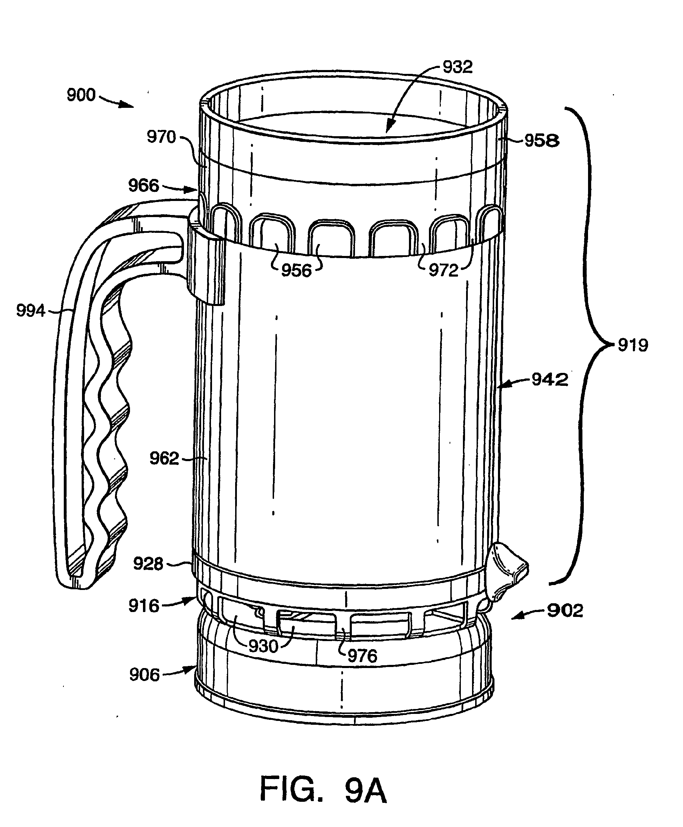

The heater 902 has a fuel supply system 904 which employs a removable fuel tank 906. As shown in FIG. 9, a fuel tank fitting 908 communicates between the replaceable fuel tank 906 and a fuel regulation and mixing assembly 910. The fuel tank fitting (or fuel intake port) 908 is preferably similar to conventional fuel tank fittings employed in gas camping stoves, allowing standard fuel canisters to be employed as the fuel tank 906. One example of such a conventional fuel canister is shown in FIG. 8 as the fuel tank 806 of the gas stove 802. While standard fuel canisters can be employed a dedicated fuel tank could be provided to serve as the fuel tank 906, allowing the fuel tank 906 to have a reduced height to provide a lighter weight, more compact heater 902 in situations where a larger fuel supply is not required. The dedicated fuel tank 906 can be refilled in the manner known in the art. To help accommodate the high pressures needed to hold a practical amount of fuel in the fuel tank 906, the fuel tank 906 illustrated has a bottom member 912 with a number of strengthening ridges 914 formed therein, allowing it to have a greater volume for height than a conventional fuel canister.

The fuel mixing and regulating assembly 910 of this embodiment is designed to allow the heater 902 to be significantly more compact than is the case with conventional gas stoves. The fuel tank fitting 908 is centrally located in a burner housing 916 such that, when the fuel tank 906 is attached to the fuel tank 906, the footprint projected by the burner housing 916 is substantially coextensive with the footprint of the fuel tank 906. The fuel mixing and regulating assembly 910 has a fuel line 918 extending from the fuel tank fitting 908 to a fuel regulator 920 which controls the amount of fuel which can pass therethrough, and which can be closed to shut off the supply of fuel. To allow the user ready access to the fuel regulator 920, it is preferably located at or near the periphery of the burner housing 916, and thus the fuel line 918 extends radially outwards. From the fuel regulator 918, the fuel passes through a fuel-air mixing tube 922 in which the stream of gas fuel entrains air for primary combustion before reaching a burner head 924. The fuel-air mixing tube 922 extends radially inwards to position the burner head 924 substantially centered in the burner housing 916. To maintain a compact structure for the heater 902, the fuel-air mixing tube 922 is horizontal over a substantial portion of its length. In a preferred embodiment, the fuel mixing and regulating assembly 910 is constructed as a clamshell assembly having a fuel mixing and regulating assembly top portion and a fuel mixing and regulating assembly bottom portion.

To facilitate ignition at burner head 924, an igniter 926 is provided. The igniter 926 can be a piezoelectric igniter such as is well known in the art for providing a spark to ignite the fuel/air mixture supplied to the burner head 924. Preferably, the igniter 926 is activated automatically when the fuel mixing and regulating assembly 910 is operated to supply fuel to the burner head 924.

The burner housing 916 has an upper support structure 928 which, in this embodiment, is formed as a ring. The burner housing 916 also has a number of intake vents 930 which allow ingress of ambient air to the area enclosed by the burner housing 9.16 and the chamber 919 when the chamber is attached to the heater 902.

The chamber 919 again has an inner vessel 932, which is substantially similar to the inner vessel 724 described above and shown in FIG. 7. The inner vessel 932 has an inner vessel interior surface 934, an inner vessel exterior surface 936, and terminates at an open top 938 and an inner vessel bottom 940.

The chamber 919 also has a housing 942 in which the inner vessel 932 resides, the housing 942 having a housing sidewall 944 with a housing sidewall exterior surface 946 and a housing sidewall interior surface 948. The housing sidewall 944 is configured to provide an annular gap 950 between the inner vessel exterior surface 936 and the housing sidewall interior surface 948. The housing sidewall 944 terminates in a housing sidewall base region 952 and a housing sidewall top region 954. The housing sidewall top region 954 has a number of exhaust vents 956 therethrough, which communicate with the annular gap 950. A rim piece 958 attaches to the open top 938 of the inner vessel 932 and to the housing sidewall top region 954 to position and affix the inner vessel 932 in the housing 942.

The housing sidewall 944 of this embodiment differs from those discussed earlier in that the housing sidewall 944 is formed with an annular passage 960 between the housing sidewall exterior surface 946 and the housing sidewall interior surface 948. The housing sidewall 944 has an exterior wall member 962, on which the housing sidewall exterior surface 946 is partially provided, and an interior wall member 964, on which the housing sidewall interior surface 948 is provided. The housing sidewall 944 is configured to allow ingress of air into the annular passage 960 at the housing sidewall base region 952 and to allow both the annular gap 950 and the annular passage 960 to communicate with the exhaust vents 956 in the housing sidewall top region 954. As discussed in greater detail below, allowing flow of air through the annular passage 960 aids in maintaining the housing sidewall exterior surface 946 at a comfortable temperature.

In the embodiment illustrated, an upper notched ring 966 and a lower notched ring 968 serve to position the interior wall member 964 with respect to the exterior wall member 962, and are configured to allow air flow into the annular passage 960 in the housing sidewall base region 952 and air flow from the annular passage 960 through the exhaust vents 956 in the housing sidewall top region 954. Preferably, the upper notched ring 966 and the lower notched ring 968 are formed of a heat resistant material such as high temperature plastic, while the interior wall member 964 and the exterior wall member 962 are formed of metal sheet stock.

The upper notched ring 966 attaches to both the interior wall member 964 and the exterior wall member 962 in the housing sidewall top region 954. The upper notched ring 966 has an upper ring continuous region 970, which resides above the exhaust vents 956, and a series of upper ring post members 972 extending downwardly therefrom, which separate and partially define the exhaust vents 956. In this embodiment, the exterior wall member 962 terminates at the exhaust vents 956 and defines their lower edges, while the upper ring continuous region 970 defines the upper edges of the exhaust vents 956. Thus, a portion of the housing sidewall exterior surface 946 is formed by the upper notched ring 966, and preferably the rim piece 958 is attached to the upper ring continuous region 970 or is formed integrally therewith. Air in the annular passage 960 is free to flow through the spaces between the upper ring post members 972 which form the exhaust vents 956. The interior wall member 964 extends to or somewhat below the height of the exterior wall member 962, thus residing below the upper ring continuous region 970 to allow the annular gap 950 to communicate with the exhaust vents 956.

The lower notched ring 968 has a lower ring continuous region 974 and a series of lower ring post members 976 extending upwardly therefrom. The lower ring continuous region 974 sealably engages the exterior wall member 962 and terminates below the interior wall member 964. Thus, the lower ring post members 976 separate and partially define annular passage intake ports 978 which allow air to enter the annular passage 960 below the interior wall member 964. The lower ring post members 976 define the vertical edges of the annular passage intake ports 978, while the lower ring continuous region 974 and the interior wall member 964 define the horizontal edges of the annular passage intake ports 978. Alternatively, the annular passage intake ports 978 could be provided through the exterior wall member 962, in which case a continuous ring could replace the lower notched ring 968 illustrated.

As the heater 902 operates, the heated gasses passing into the annular gap 950 cause the interior wall member 964 to become heated. Conduction of heat through the interior wall member 964 causes some heating of the air residing in the annular passage 960. This heated air rises and eventually exits through the exhaust vents 956, while unheated air is drawn from the area enclosed by the burner housing 916 and the chamber 919 through the annular passage intake ports 978. The convective flow of air through the annular passage 960 prevents build-up of heat in the annular passage 960 and serves to maintain .the housing sidewall exterior surface 946 at a comfortable temperature to allow a user to handle the heating vessel 900 while the heater 902 operates.

Means are provided for mounting the housing 942 to the upper support structure 928 of the heater 902. In this embodiment, these means are provided by the lower ring continuous region 974, which is designed to removably attach to the ring-shaped upper support structure 928 of the heater 902. The attachment of the lower ring continuous region 974 to the upper support structure 928 can be achieved by screw threads, a bayonet-type mounting, circumferentially-positioned clips, or similar attachment structures known in the art.

An arrangement of downwardly-directed protrusions 980 are attached to the inner vessel exterior surface 728, and are similar to the protrusions 980 shown in FIG. 7, being arranged in a first ring of fins 982 and a second ring of fins 984. Again, the first ring of fins 982 defines a cavity 986 which surrounds a peripheral border 988 of the burner head 924. The protrusions 980 are positioned to collect a substantial portion of the heat produced by the burner bead 924 as the heated gasses produced by the burner head pass through the protrusions 980 into the annular gap 950.

A baffle (or base) plate 990 is provided in this embodiment, which is attached to the interior wall 964. The baffle plate 990 resides below the protrusions 980 and above the annular passage intake ports 978. The baffle plate 990 is provided with a plate central opening 992 which, in this embodiment, is sized somewhat larger than the peripheral border 988 of the burner head 924 to allow the burner head 924 to be inserted at least partially through the plate central opening 992 when the chamber 919 is mounted to the heater 902. The plate central opening 992 limits dilution air reaching the burner head 924 and the area in which the protrusions 980 reside. The baffle plate 990 is preferably formed of metal sheet stock and can be affixed to the interior wall member 964 by brazing, welding, adhering with high temperature adhesive, or a similar technique. Alternatively, the baffle plate 990 could be formed as an integral part with the interior wall member 964.

In this embodiment, the baffle plate 990 also serves to block heated gasses generated by the burner head 924 from entering the annular passage 960 through the annular passage intake ports 978. Since the baffle plate 990 resides below the protrusions 980, it also serves to protect the protrusions 980 from damage when the chamber 919 is removed from the heater 902.

Although the annular passage 960 prevents the housing sidewall exterior surface 946 from becoming uncomfortably hot, the heating vessel 900 preferably has a handle 994 mounted to the housing for easier grasping of the heating vessel 900 by a user. The handle 994 is preferably detachable and configured to be stored in the inner vessel 932.

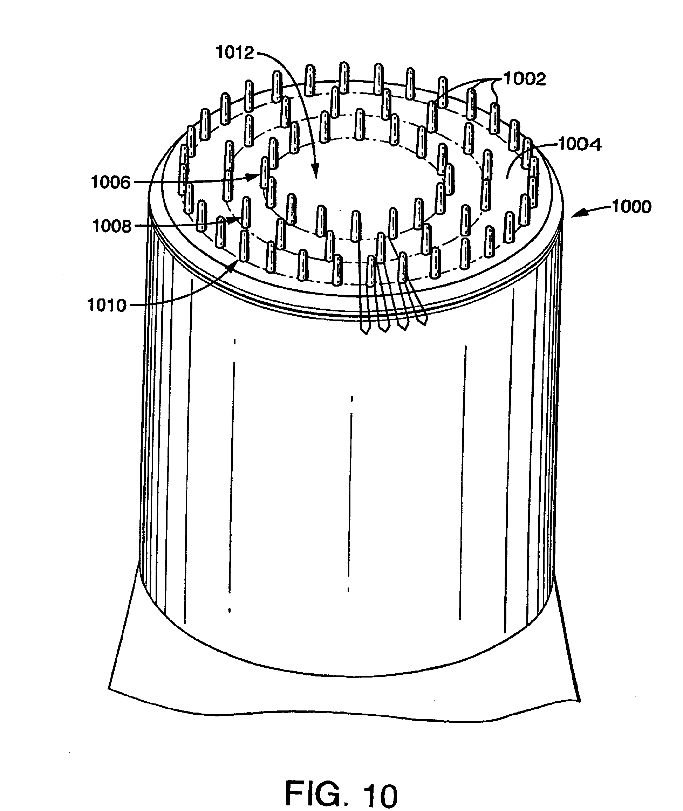

FIG. 10 illustrates a portion of an inner vessel 1000 which is not in accordance with the invention which could be employed in any, of the double walled embodiments discussed above, and which differs from the inner vessels (724, 818, 932) discussed above in the details of an arrangement of protrusions 1002 which are mounted thereon. The inner vessel 1000 has an inner vessel bottom 1004 to which the protrusions 1002 are affixed. Preferably, the inner vessel 1000 is formed by die casting, with the protrusions 1002 formed integrally therewith. For this reason, the protrusions 1002 are somewhat tapered to provide a degree of draft to facilitate removal of the inner vessel 1000 and protrusions 1002 from the die. The protrusions 1002 illustrated are circular in cross-section, and hence the effective diameter of the protrusions 1002 is the average diameter of the cross-section. Protrusions 1002 of other shapes could be formed by die casting, however, the aspect ratio of the protrusions 1002 may be limited by the need to allow removal of the inner vessel 1000 and the protrusions 1002 from the die.

Since the protrusions 1002 are formed by die casting, they can be positioned in any desired arrangement on the inner vessel bottom 1004, with the particular arrangement shown in FIG. 10 being only one example. The protrusions 1002 in this embodiment are arranged in a first (inner) ring of protrusions 1006, a second (intermediate) ring of protrusions 1008, and a third (outer) ring of protrusions 1010. The protrusions 1002 in the first ring of protrusions 1006 define the boundary of a cavity 1012 which is centered on the inner vessel bottom 1004. The protrusions 1002 of the second ring of protrusions 1008 are angularly positioned between the protrusions 1002 in the first ring of protrusions 1006. Thus, the heated gasses flowing radially outwards from the cavity 1012 are first split into individual streams by the protrusions 1002 in the first ring of protrusions 1006 and then each stream is split by the protrusions 1002 of the second ring of protrusions 1008. Similarly, the protrusions 1002 of the third ring of protrusions 1010 are angularly positioned between the protrusions 1002 in the second ring of protrusions 1008, and the streams of heated gas are again split by the protrusions 1002 of the third ring of protrusions 1010. The action of splitting the flowing gas into increasingly smaller streams enhances heat transfer by placing the protrusions 1002 in the centers of the streams where the temperature is greatest.

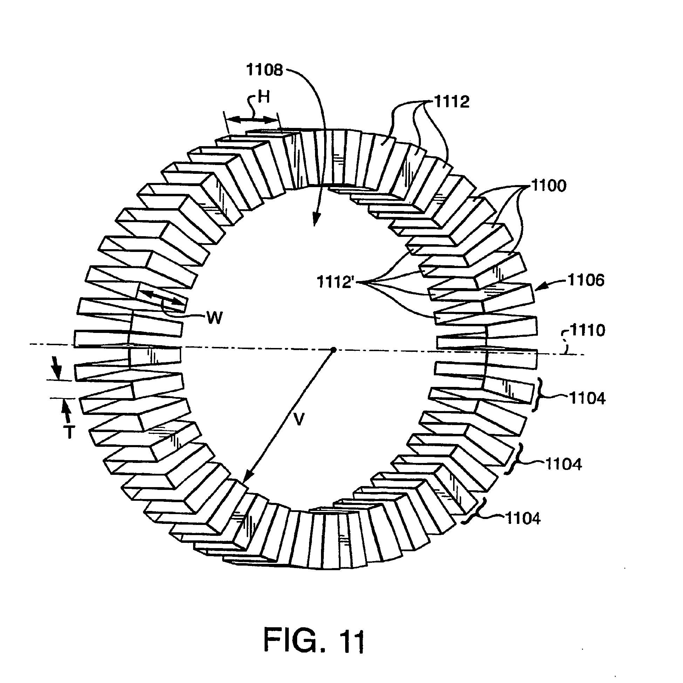

FIG. 11 illustrates a configuration of protrusions 1100 which can be employed on an inner vessel 1102, or on a chamber as shown in FIG. 1. The protrusions 1100 are formed by undulations 1104 in a protrusion piece 1106. The undulations 1104 are distributed about a cavity 1108 having a cavity axis 1110, and form the protrusion piece 1106 into a ring of the protrusions 1100, which extends substantially parallel to the cavity axis 1110, and a series of connecting segments 1112 between adjacent protrusions 1100. The protrusions 1100 are shaped as fins that are oriented substantially radially with respect to the cavity axis 1110. Here, the undulations 1104 are square-wave-shaped, and the connecting segments 1112 extend substantially normal to the cavity axis 1110. This allows alternate connecting segments 1112' to provide a substantial planar area for attachment to an inner vessel 1102 (or chamber).

Such undulating protrusions 1106 may be formed from an aluminum strip with a thickness *T* of about 0.012" and a width *W* of about 0.30". The undulations 1104 in this example have a height *H* of about 0.55" and a spacing *S* between the protrusions 1100 of about 0.05". Using these values for the width *W*, the thickness *T*, and the height *H* yields an aspect ratio of about 8:1.

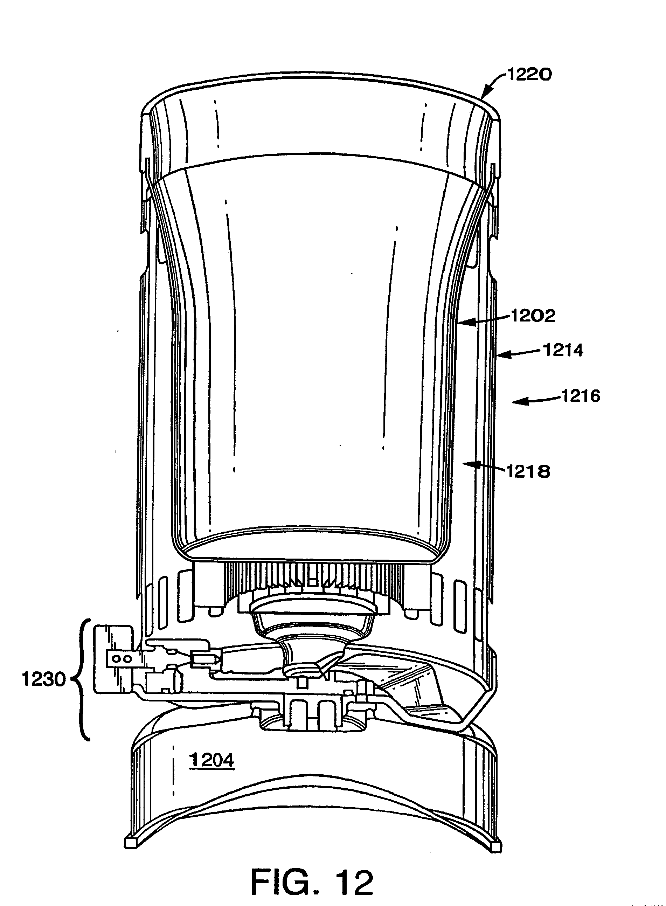

As shown in FIG. 12, an inner vessel 1202 having the protrusions 1100 of FIG. 11 can be installed into a housing 1214 to form a double walled chamber 1216 having an annular gap 1218. Due to the effectiveness of the protrusions 1100 in removing heat from the hot exhaust gasses passing therethrough, it has been found unnecessary to place insulation in the annular gap 1118. Lack of insulation may also promote air flow through the annular gap 1218 to further limit the temperature of the housing 1214. However, insulating the housing 1214 may still be advantageous in reducing cooling of the contents of the inner vessel 1202 after heating. Again, a heater 1230 and fuel source 1204 may be provided.

While the foregoing has described what are considered to be the best mode and/or other preferred embodiments, it is understood that various modifications may be made therein and that the invention or inventions may be implemented in various forms and embodiments, and that they may be applied in numerous applications, only some of which have been described herein. As used herein, the terms "includes" and "including" mean without limitation. It is intended by the following claims to claim any and all modifications and variations that fall within the true scope of the inventive concepts as defined in the claims.

## Claims

1. A system for heating a substance, the system comprising:
a vessel (100) having enclosed sides, a thermally conductive bottom end (114) and a top end (115) forming an opening for the introduction and extraction of the substance, the bottom end (114) having an external bottom side (116) having a central area (118) for receiving heat;
a series of integrally connected, thermally conductive protrusions (160; 1100) comprising a continuous piece of material fixedly secured to, extending continuously around a peripheral region of said external bottom side (116), and extending from the vessel external bottom side so as to define with the central area a cavity with a first diameter; and
a heater (130) comprising a heat source (302) having a heat outlet header disposed below said cavity and configured to deliver heat to the cavity said header being generally round in shape and having a second diameter that is less than said first diameter.

2. A system as set forth in Claim I wherein said protrusions (1100) are interconnected by segments (1112) between adjacent protrusions.

3. A system as set forth in claim 2 wherein said protrusions (1100) and interconnected segments (1112) selectively form a generally square waved shape.

4. A system as set forth in claim 2 wherein said interconnecting segments (1112) are disposed substantially parallel to said external bottom side (116).

5. A system as set forth in claim 1 wherein said protrusions (160, 1100) are composed of an aluminium material.

6. A system as set forth in claim 1 wherein said protrusions (160, 1100) are formed of a strip having a thickness of about 0.3mm (0.012 inches).

7. A system as set forth in claim 1 wherein said protrusions (160, 1100) have a radial dimension between an inner edge and an outer edge of said peripheral region of about 7.6mm (0.3 inches).

8. A system as set forth in claim 1 wherein the length of said protrusions (160, 1100) extending from the external bottom side (116) is about 12.7mm (0.5 inches).

9. A system as set forth in claim 1 wherein said thermally conductive protrusions (160, 1100) have an aspect ratio in the range 5-20 or preferably 10-20.

10. A system as set forth in claim 1 wherein said thermally conductive protrusions (160, 1100) are secured to the external bottom side (116) by way of brazing.

11. A system as set forth in claim 1 wherein said thermally conductive protrusions (160, 1100) are secured to the external bottom side (116) by sonic welding.

12. A system as set forth in claim 2 wherein said interconnecting segments (1112) have a length between protrusions of about 1.27mm (0.05 inches).

13. A portable heating system comprising the system of any of claims 1-12 for heating a substance wherein:
said series of protrusions (160, 1100) comprises a single thermally conductive member having an inner peripheral edge defining an inner diameter and an outer peripheral edge defining an outer diameter, the conductive member having a plurality of undulating protrusions extending downwardly from the external bottom side; and
said heater (130) comprises:
a top housing (158) having a top rim (152) coupled circumferentially to the external bottom side (116) of said vessel, a side structure extending downwardly from said top rim (152) and having a plurality of exhaust vents (156) formed therein, and a bottom rim (154);
a burner (302) having a fuel intake port (144) configured to couple to a fuel source (104), wherein the outlet header has a diameter less than said thermally conductive member inner diameter; and
a bottom housing (147) configured to couple to the bottom rim and substantially encasing the heat source, the bottom housing having a plurality of air vents (142) formed therein.

14. A portable heating system comprising the system of any of claims 1-12 for heating a substance,
wherein said heater (130) comprises a burner (302) having a fuel intake port (144) configured to couple to a fuel source (104);
wherein said series of protrusions (160; 1100) comprises a single thermally conductive member (1106) having an inner peripheral edge defining an inner diameter and an outer peripheral edge defining an outer diameter, with said inner diameter being greater than said first diameter, the conductive member (1106) having a plurality of undulating protrusions extending downwardly from the external bottom side (116);
and further comprising a skirt having a top rim coupled circumferentially to the external bottom side (116) and encasing the protrusions (160; 1100), the skirt having a series of exhaust vents (156) formed therein and having a bottom rim (154); and
a base (140) configured to couple to the bottom rim (154) and substantially encasing the burner (302), the base (140) having a set of air inlet vents (142) formed therein.

15. A portable heating system comprising the system of any of claims 1-12 for heating a substance, wherein the heat source (302) includes a burner head and a port (144) for coupling to a fuel supply system (104), and wherein said burner head is disposed generally centrally below said cavity.

16. A portable heating system comprising the system of any of claims 1-12 for heating a substance, wherein the enclosed sides of said vessel (100) define a chamber (110), and further comprising:
a top housing (158) having a top rim (152) coupled circumferentially to the external bottom side (116) of said vessel, a side structure extending downwardly from said top rim (152) and having a plurality of exhaust vents (156) formed therein, and a bottom rim (154); and
a bottom housing (147) having a top rim (146) configured to be selectively coupled to the top housing bottom rim (154) and containing a burner (302) having a heat outlet head disposed below the external bottom side (116) when said bottom housing (147) is coupled to said top housing (158), said bottom housing further having a plurality of air vents (142) formed therein;
wherein said bottom housing (147) is so configured and sized as to be removable from said top housing (158) and temporarily placed for storage in said vessel chamber (110).

17. A portable heating system as set forth in claim 16 wherein said bottom housing (147) is so configured and sized as to be temporarily contained within said vessel chamber (110) in an upright position with its top rim (146) facing said vessel top end (115).

18. A portable heating system as set forth in claim 16 wherein said burner fuel intake port (144) is disposed at a lower end of said bottom housing (147) so as to facilitate the coupling to a fuel source (104) in a position below said bottom housing (147).

19. A portable heating system as set forth in claim 18 wherein, when said fuel source (104) is coupled to said burner fuel intake port (144), both the bottom housing (147) and the fuel source (104) are storable in said vessel chamber (110).

20. A portable heating system as set forth in claim 16 wherein said bottom housing (147) also includes an igniter (306) which extends to a position above said heat outlet head.

21. A portable heating system as set forth in claim 20 wherein said igniter (306) has a portion which is disposed above the level of said lower housing top rim (146).

22. A portable heating system as set forth in claim 21 and including a cover (102) for said vessel top end (115), said cover having an indention (402) therein to receive a portion of said igniter (306) when said bottom housing (147) is stored in said vessel chamber (110) and said top end cover (102) is in place over said vessel top end (115).

23. A portable heating system as set forth in claim 16 wherein said bottom housing top rim (146) is coupled to said top housing bottom rim (154) by way of frictional fit of said top housing bottom rim (154) within said bottom housing top rim (146).

24. A portable heating system as set forth in claim 16 wherein said bottom housing top rim (146) is selectively coupled to the top housing (158) by means of a bayonet coupling, a snap coupling, or a threaded coupling.

## Patentansprüche

1. System zum Erhitzen einer Substanz, wobei das System Folgendes umfasst:
einen Behälter (100) mit geschlossenen Seiten, ein hitzeleitendes unteres Ende (114) und ein oberes Ende (115), das eine Öffnung für die Introduktion und Extraktion der Substanz bildet, wobei das untere Ende (114) eine externe Unterseite (116) mit einem zentralen Bereich (118) zum Empfangen der Hitze hat;
eine Reihe integral miteinander verbundener, hitzeleitender Vorsprünge (160, 1100), die ein ununterbrochenes Stück Material umfassen, das fest daran gesichert ist, sich ununterbrochen um einen Umfangsbereich der externen Unterseite (116) erstreckt, und sich von der externen Unterseite des Behälters weg erstreckt, um mit dem zentralen Bereich eine Aussparung mit einem ersten Durchmesser zu definieren; und
einen Erhitzer (130) umfassend eine Hitzequelle (302) mit einem Hitze-Austrittssammler, der unter der Aussparung angeordnet ist und konfiguriert ist, um der Aussparung Hitze zuzuführen, wobei der Austrittssammler gewöhnlich eine runde Form und einen zweiten Durchmesser hat, der kleiner als der erste Durchmesser ist.

2. System, wie in Anspruch 1 dargestellt, wobei die Vorsprünge (1100) von Segmenten (1112) zwischen angrenzenden Vorsprüngen miteinander verbunden sind.

3. System, wie in Anspruch 2 dargestellt, wobei die Vorsprünge (1100) und die Verbindungssegmente (1112) selektiv eine generell viereckig gewellte Form bilden.

4. System, wie in Anspruch 2 dargestellt, wobei die Verbindungssegmente (1112) im Wesentlichen parallel zur externen Unterseite (116) angeordnet sind.

5. System, wie in Anspruch 1 dargestellt, wobei die Vorsprünge (160, 1100) aus einem Aluminiummaterial bestehen.

6. System, wie in Anspruch 1 dargestellt, wobei die Vorsprünge (160, 1100) von einem Band gebildet werden, das eine Dicke von ungefähr 0,3 mm (0,012 Zoll) hat.

7. System, wie in Anspruch 1 dargestellt, wobei die Vorsprünge (160, 1100) eine radiale Dimension zwischen einer inneren Kante und einer äusseren Kante des Umfangsbereichs von ungefähr 7,6 mm (0,3 Zoll) haben.

8. System, wie in Anspruch 1 dargestellt, wobei die Länge der Vorsprünge (160, 1100), die sich von der externen Unterseite (116) aus erstrecken, ungefähr 12,7 mm (0,5 Zoll) beträgt.

9. System, wie in Anspruch 1 dargestellt, wobei die hitzeleitenden Vorsprünge (160, 1100) ein Aspektverhältnis im Bereich von 5-20 oder vorzugsweise 10-20 haben.

10. System, wie in Anspruch 1 dargestellt, wobei die hitzeleitenden Vorsprünge (160, 1100) durch Löten an der externen Unterseite (116) gesichert sind.

11. System, wie in Anspruch 1 dargestellt, wobei die hitzeleitenden Vorsprünge (160, 1100) durch Schallschweissen an der externen Unterseite (116) gesichert sind.

12. System, wie in Anspruch 2 dargestellt, wobei die Verbindungssegmente (1112) eine Länge zwischen den Vorsprüngen von ungefähr 1,27 mm (0,05 Zoll) haben.

13. Tragbares Heizsystem, umfassend das System nach irgendeinem der Ansprüche 1-12 zum Erhitzen einer Substanz, wobei:
die Reihe von Vorsprüngen (160, 1100) ein einziges hitzeleitendes Element mit einer inneren peripheren Kante hat, die einen inneren Durchmesser definiert und eine äussere periphere Kante, die einen äusseren Diameter definiert, wobei das leitende Element eine Mehrzahl von wellenförmigen Vorsprüngen hat, die sich von der externen Unterseite aus abwärts erstrecken; und
der Erhitzer (130) umfasst:
ein oberes Gehäuse (158) mit einem oberen Rand (152), das ringsum an die externe Unterseite (116) des Behälters gekoppelt ist, wobei sich eine Seitenstruktur abwärts vom oberen Rand (152) hin erstreckt und eine Mehrzahl von Absaugöffnungen (156), die darin gebildet sind hat, und einem unteren Rand (154);
einen Brenner (302) mit einer Brennstoff-Einlassöffnung (144), der konfiguriert ist, um sich an eine Brennstoffquelle (104) anzukoppeln, wobei der Austrittssammler einen Durchmesser hat, der kleiner ist als der Innendurchmesser des hitzeleitenden Elements; und
ein unteres Gehäuse (147), das konfiguriert ist, um sich an den unteren Rand anzukoppeln und die Hitzequelle im Wesentlichen einschliesst, wobei das untere Gehäuse eine Mehrzahl von Belüftungsdüsen (142) umfasst, die im Letzteren ausgebildet sind.

14. Tragbares Heizsystem, umfassend das System nach irgendeinem der Ansprüche 1-12 zum Erhitzen einer Substanz,
wobei der Erhitzer (130) einen Brenner (302) umfasst, der eine Brennstoff-Einlassöffnung (144) hat, die konfiguriert ist, um sich an eine Brennstoffquelle (104) anzukoppeln;
wobei die Reihe der Vorsprünge (160, 1100) ein einziges hitzeleitendes Element (1106) mit einer inneren peripheren Kante hat, die einen inneren Durchmesser definiert und eine äussere periphere Kante, die einen äusseren Durchmesser definiert, wobei der innere Durchmesser grösser ist als der erste Durchmesser, wobei das leitende Element (1106) eine Mehrzahl von wellenförmigen Vorsprüngen hat, die sich von der externen Unterseite (116) abwärts hin erstrecken;
und ferner umfassend eine Randleiste mit einem oberen Rand, der ringsum an die externe Unterseite (116) gekoppelt ist und die Vorsprünge (160, 1100) einschliesst, wobei die Randleiste eine Reihe von Absaugöffnungen (156) hat, die darin gebildet sind, und einem unteren Rand (154); und
eine Basis (140), die konfiguriert ist, um sich am unteren Rand (154) anzukoppeln und den Brenner (302) im Wesentlichen einschliesst, wobei die Basis (140) einen Satz Lufteinlassöffnungen (142) hat, die darin gebildet sind.

15. Tragbares Heizsystem, umfassend das System nach irgendeinem der Ansprüche 1-12 zum Erhitzen einer Substanz, wobei die Hitzequelle (302) einen Brennerkopf und einen Anschluss (144) umfasst, zum Ankoppeln an ein Brennstoff-Zuführ-System (104), und wobei der Brennerkopf generell zentral unterhalb der Aussparung angeordnet ist.

16. Tragbares Heizsystem, umfassend das System nach irgendeinem der Ansprüche 1-12 zum Erhitzen einer Substanz, wobei die eingeschlossenen Seiten des Behälters (100) eine Kammer (110) definieren, und ferner Folgendes umfassen:
ein oberes Gehäuse (158) mit einem oberen Rand (152), der ringsum an die äussere Unterseite (116) des Behälters gekoppelt ist, wobei sich eine Seitenstruktur vom oberen Rand (152) aus abwärts erstreckt und eine Mehrzahl von Absaugöffnungen (156) hat, die darin gebildet sind, und einem unteren Rand (154); und
ein unteres Gehäuse (147) mit einem oberen Rand (146), der konfiguriert ist, um sich selektiv an den unteren Rand (154) des oberen Gehäuses anzukoppeln und das einen Brenner (302) umfasst, der einen Hitze-Austrittssammler umfasst, der unterhalb der externen Unterseite (116) angeordnet ist, wenn das unteres Gehäuse (147) an das obere Gehäuse (158) gekoppelt ist, wobei das untere Gehäuse ferner eine Mehrzahl von Lufteinlassöffnungen (142) umfasst, die darin gebildet sind;
wobei das untere Gehäuse (147) so konfiguriert und ausgemessen ist, dass es vom oberen Gehäuse (158) entfernt werden kann und vorübergehend zur Verwahrung in der Behälterkammer (110) eingesetzt werden kann.

17. Tragbares Heizsystem, wie in Anspruch 16 dargestellt, wobei das untere Gehäuse (147) so konfiguriert und ausgemessen ist, das es vorübergehend innerhalb der Behälterkammer (110) in einer aufrechten Position mit seinem oberen Rand (146) gegenüber dem oberen Ende (115) des Behälters enthalten ist.

18. Tragbares Heizsystem, wie in Anspruch 16 dargestellt, wobei die Brennstoff-Einlassöffnung (144) an einem unteren Ende des unteren Gehäuses (147) angeordnet ist, um das Ankuppeln an eine Brennstoffquelle (104) in einer Position unterhalb des unteren Gehäuses (147) zu erleichtern.

19. Tragbares Heizsystem, wie in Anspruch 18 dargestellt, wobei, wenn die Brennstoffquelle (104) an die Brennstoff-Einlassöffnung (144) gekoppelt ist, sowohl das untere Gehäuse (147) als auch die Brennstoffquelle (104) in der Behälterkammer (110) aufbewahrt werden können.

20. Tragbares Heizsystem, wie in Anspruch 16 dargestellt, wobei das untere Gehäuse (147) ebenfalls eine Zündvorrichtung (306) enthält, die sich an einer Position oberhalb des Hitze-Austrittssammlers erstreckt.

21. Tragbares Heizsystem, wie in Anspruch 20 dargestellt, wobei die Zündvorrichtung (306) einen Abschnitt hat, der sich oberhalb des Niveaus des oberen Rands (146) des unteren Gehäuses befindet.

22. Tragbares Heizsystem, wie in Anspruch 21 dargestellt und umfassend einen Deckel (102) für das obere Ende (115) des Gehäuses, wobei der Deckel eine Ausbeulung (402) hat, um einen Teil der Zündvorrichtung (306) zu empfangen, wenn das untere Gehäuse (147) in der Behälterkammer (110) gelagert wird und der Deckel (102) des oberen Endes an seinem Platz auf dem oberen Ende (115) des Behälters ist.

23. Tragbares Heizsystem, wie in Anspruch 16 dargestellt, wobei der obere Rand (146) des unteren Gehäuses an den unteren Rand (154) des oberen Gehäuses durch Reibungspassung des unteren Rands (154) des oberen Gehäuses in den oberen Rand (146) des unteren Gehäuses gekoppelt ist.

24. Tragbares Heizsystem, wie in Anspruch 16 dargestellt, wobei der obere Rand (146) des unteren Gehäuses selektiv durch eine Bajonettkupplung, eine Schnappkupplung oder eine Schraubkupplung an das obere Gehäuse (158) gekoppelt ist.

## Revendications

1. Système pour chauffer une substance, le système comprenant:
un récipient (100) ayant des côtés fermés, une extrémité inférieure (114) thermiquement conductrice et une extrémité supérieure (115) formant une ouverture pour l'introduction et l'extraction de la substance, l'extrémité inférieure (114) ayant un côté inférieur externe (116) avec une surface centrale (118) pour réceptionner la chaleur;
une série de saillies (160; 1100) thermiquement conductrices et intégralement connectées comprenant une pièce de matériau qui y est fixement attachée, s'étendant de manière continue autour d'une région périphérique dudit côté inférieur externe (116), et s'étendant à partir du côté inférieur externe du récipient pour définir avec la surface centrale une cavité avec un premier diamètre; et
un appareil de chauffage (130) comprenant une source de chaleur (302) ayant un collecteur de sortie de chaleur disposé en-dessous de ladite cavité et configuré pour délivrer de la chaleur dans la cavité, ledit collecteur étant de forme généralement ronde et ayant un deuxième diamètre qui est moindre que ledit premier diamètre.

2. Système tel que décrit dans la revendication 1, dans lequel lesdites saillies (1100) sont interconnectées par des segments (1112) entre les saillies adjacentes.

3. Système tel que décrit dans la revendication 2, dans lequel lesdites saillies (1100) et les segments d'interconnection (1112) forment sélectivement une vague généralement carrée.

4. Système tel que décrit dans la revendication 2, dans lequel lesdits segments d'interconnection (1112) sont disposés de manière substantiellement parallèle audit côté inférieur externe (116).

5. Système tel que décrit dans le revendication 1, dans lequel lesdites saillies (160, 1100) sont composées d'un matériau en aluminium.

6. Système tel que décrit dans la revendication 1, dans lequel lesdites saillies (160, 1100) sont formées d'une bande ayant une épaissuer d'environ 0,3 mm (0,012 pouces).

7. Système tel que décrit dans la revendication 1 dans lequel lesdites saillies (160, 1100) ont une dimension radiale entre un bord intérieur et un bord extérieur de ladite région périphérique d'environ 7,6 mm (0,3 pouces).

8. Système tel que décrit dans le revendication 1, dans lequel la longueur desdites saillies (160, 1100) s'étendant depuis le côté inférieur externe (116) est d'environ 12,7 mm (0,5 pouces).

9. Système tel que décrit dans le revendication 1, dans lequel lesdites saillies thermiquement conductrices (160, 1100) ont un rapport largeur/hauteur de l'ordre de 5-20 ou préférablement 10-20.

10. Système tel que décrit dans le revendication 1, dans lequel lesdites saillies thermiquement conductrices (160, 1100) sont fixées au côté inférieur externe (116) par brasage.

11. Système tel que décrit dans le revendication 1, dans lequel lesdites saillies thermiquement conductrices (160, 1100) sont fixées au côté inférieur externe (116) par soudage sonique.

12. Système tel que décrit dans le revendication 2, dans lequel lesdits segments d'interconnection (1112) ont une longueur entre les saillies d'environ 1,27 mm (0,05 pouces).

13. Système de chauffage portable comprenant le système selon l'une quelconque des revendications 1 à 12 pour chauffer une substance, dans lequel:
ladite série de saillies (160, 1100) comprend un élément thermiquement conducteur unique ayant un bord périphérique intérieur définissant un diamètre intérieur et un bord périphérique extérieur définissant un diamètre extérieur, l'élément conducteur ayant une pluralité de saillies ondulantes s'étendant vers le bas à partir du côté inférieur externe; et
ledit appareil de chauffage (130) comprend:
un boîtier supérieur (158) ayant un bord supérieur (152) couplé circonférentiellement au côté inférieur externe (116) dudit récipient, une structure latérale s'étendant vers la bas à partir du bord supérieur (152) et ayant une pluralité d'orifices d'extraction d'air (156) qui y sont formés, et un bord inférieur (154);
un brûleur (302) ayant un orifice d'amenée du combustible (144) configuré pour être couplé à une source de combustible (104), dans lequel le collecteur de sortie a un diamètre moindre que ledit diamètre interne de l'élément thermiquement conducteur; et
un boîtier inférieur (147) configuré pour un couplage au bord inférieur et qui renferme substantiellement la source de chaleur, le boîtier inférieur ayant une pluralité de bouches d'air (142) qui y sont formées.

14. Système de chauffage portable comprenant le système selon l'une quelconque des revendications 1 à 12 pour chauffer une substance,
dans lequel ledit appareil de chauffage (130) comprend un brûleur (302) ayant un orifice d'amenée du combustible (144) configuré pour être couplé à une source de combustible (104);
dans lequel ladite série de saillies (160, 1100) comprend un élément thermiquement conducteur unique (1106) ayant un bord périphérique intérieur définissant un diamètre intérieur et un bord périphérique extérieur définissant un diamètre extérieur, ledit diamètre intérieur étant supérieur audit premier diamètre, l'élément conducteur (1106) ayant une pluralité de saillies ondulantes s'étendant vers la bas à partir du côté inférieur externe (116);
et comprenant en outre une collerette ayant un bord supérieur couplé circonférentiellement au côté inférieur externe (116) et renfermant les saillies (160, 1100), la collerette ayant une série d'orifices d'extraction d'air (156) qui y sont formés et ayant un bord inférieur (154); et
une base (140) configurée pour être couplée au bord inférieur (154) et renfermant substantiellement le brûleur (302), la base (140) ayant un ensemble d'orifices d'admission d'air (142) qui y sont formés.

15. Système de chauffage portable comprenant le système selon l'une quelconque des revendications 1 à 12 pour chauffer une substance, dans lequel la source de chaleur (302) inclut une tête de brûleur et un orifice (144) pour un couplage à un système d'alimentation en carburant (104), et dans lequel ladite tête de brûleur est disposée de manière générale centralement en-dessous de ladite cavité.

16. Système de chauffage portable comprenant le système selon l'une quelconque des revendications 1 à 12 pour chauffer une substance, dans lequel les côtés fermés dudit récipient (100) définissent une chambre (110), et comprenant en outre:
un boîtier supérieur (158) ayant un bord supérieur (152) couplé circonférentiellement au côté inférieur externe (116) dudit récipient, une structure latérale s'étendant vers le bas depuis ledit bord supérieur (152) et ayant une pluralité d'orifices d'extraction d'air (156) qui y sont formés, et un bord inférieur (154); et
un boîtier inférieur (147) ayant un bord supérieur (146) configuré pour être sélectivement couplé au bord inférieur du boîtier supérieur (154) et contenant un brûleur (302) ayant un collecteur de sortie de chaleur disposé en-dessous du côté inférieur externe (116) lorsque ledit boîtier inférieur (147) est couplé audit boîtier supérieur (158), ledit boîtier inférieur ayant en outre une pluralité de bouches d'air (142) qui y sont formées;
dans lequel ledit boîtier inférieur (147) est configuré et dimensionné de sorte à pouvoir être retiré dudit boîtier supérieur (158) et placé temporairement pour stockage dans ladite chambre du récipient (110).

17. Système de chauffage portable tel que décrit dans la revendication 16 dans lequel ledit boîtier inférieur (147) est configuré et dimensionné de sorte à être contenu temporairement dans ladite chambre du récipient (110) dans une position verticale, son bord supérieur (146) faisant face à ladite extrémité supérieure du récipient (115).

18. Système de chauffage tel que décrit dans la revendication 16, dans lequel ledit orifice d'amenée du combustible (144) est disposé à une extrémité inférieure dudit boîtier inférieur (147) afin de faciliter le couplage à une source de carburant (104) à une position en-dessous dudit boîtier inférieur (147).

19. Système de chauffage portable tel que décrit dans la revendication 18, dans lequel, lorsque ladite source de carburant (104) est couplée audit orifice d'amenée du combustible (144), le boîtier inférieur (147) et la source de carburant (104) sont tous les deux stockables dans ladite chambre du récipient (110).

20. Système de chauffage portable tel que décrit dans la revendication 16, dans lequel ledit boîtier inférieur (147) inclut également un allumeur (306) qui s'étend à une position au-dessus du collecteur de sortie de chaleur.

21. Système de chauffage portable tel que décrit dans la revendication 20, dans lequel ledit allumeur (306) a une partie qui est disposée au-dessus du niveau dudit bord supérieur du boîtier inférieur (146).

22. Système de chauffage portable tel que décrit dans la revendication 21 et incluant un couvercle (102) pour ladite extrémité supérieure du récipient (115), ledit couvercle ayant une cannelure (402) pour recevoir une partie dudit allumeur (306) quand ledit boîtier inférieur (147) est stocké dans ladite chambre du récipient (110) et ledit couvercle de l'extrémité supérieure (102) est en place au-dessus de ladite extrémité supérieure du récipient (115).

23. Système de chauffage portable tel que décrit dans la revendication 16, dans lequel ledit bord supérieur du boîtier inférieur (146) est couplé audit bord inférieur du boîtier supérieur (154) par ajustement par friction dudit bord inférieur du boîtier supérieur (154) dans ledit bord supérieur du boîtier inférieur (146).

24. Système de chauffage portable tel que décrit dans la revendication 16, dans lequel ledit bord supérieur du boîtier inférieur (146) est couplé sélectivement au boîtier supérieur (158) au moyen d'un couplage de type bayonnette, par encliquetage ou fileté.
